# EUROPEAN PATENT SPECIFICATION

(11) **EP 4 513 866 B1**
(45) Date of publication and mention of the grant of the patent: **16.09.2026**
(21) Application number: 23827396.5
(22) Date of filing: 25.05.2023
(51) Int. Cl.: H04N 9/31, H04N 21/41, H04N 21/485, H04N 5/57

(54) **ELECTRONIC DEVICE THAT PROVIDES IMAGE CONTENT IN CONJUNCTION WITH EXTERNAL ELECTRONIC DEVICE FOR PROJECTING IMAGE, AND CONTROL METHOD THEREFOR**
ELEKTRONISCHE VORRICHTUNG MIT BILDINHALT IN VERBINDUNG MIT EINER EXTERNEN ELEKTRONISCHEN VORRICHTUNG ZUR BILDPROJEKTION UND STEUERUNGSVERFAHREN DAFÜR
DISPOSITIF ÉLECTRONIQUE QUI FOURNIT UN CONTENU D'IMAGE EN CONJONCTION AVEC UN DISPOSITIF ÉLECTRONIQUE EXTERNE POUR LA PROJECTION D'UNE IMAGE, ET PROCÉDÉ DE COMMANDE À CET EFFET

(30) Priority: 23.06.2022 KR 20220077125; 08.09.2022 KR 20220114338
(43) Date of publication of application: 26.02.2025
(73) Proprietor: Samsung Electronics Co., Ltd., Suwon-si, Gyeonggi-do 16677 (KR)
(72) Inventor: KIM, Youngtae, Suwon-si Gyeonggi-do 16677 (KR); GOO, Bonseuk, Suwon-si Gyeonggi-do 16677 (KR); SOH, Byungseok, Suwon-si Gyeonggi-do 16677 (KR); AHN, Taegyoung, Suwon-si Gyeonggi-do 16677 (KR); YOON, Sangki, Suwon-si Gyeonggi-do 16677 (KR); LEE, Youngchol, Suwon-si Gyeonggi-do 16677 (KR); LEE, Weonhee, Suwon-si Gyeonggi-do 16677 (KR)
(74) Representative: Appleyard Lees IP LLP
(86) International application number: PCT/KR2023/007194
(87) International publication number: WO 2023/249276

(56) References cited:
- EP-A1- 3 422 707
- JP-A- 2021 166 356
- JP-B2- 6 953 692
- KR-A- 20180 028 782
- KR-B1- 102 382 497
- US-A1- 2014 051 510
- US-A1- 2020 329 220
- US-B2- 9 536 493

## Description

### [Technical Field]

The present disclosure relates to an electronic device that provides the image content in conjunction with the external electronic device for projecting an image, and the control method thereof.

### [Background Art]

In recent years, the quality of a content has improved and the needs for providing a content on a large screen are increasing even at home. In response to these needs, a size of a display disposed in the home also becomes greater to provide the large screen.

Meanwhile, as the display of the electronic device becomes larger, a content may be provided on the large screen. However, the size of the screen provided in the display of the electronic device is limited due to a problem in a process of manufacturing the display and increases of costs for buying the electronic device. Further, there are limitations in installation and usage environments due to the display of the electronic device which is already installed in the home. Also, there are needs for providing a content on screens of various sizes according to types of a content, an environment in the home, and requirements of family members.

EP 3 422 707 A1 discloses a display system comprising a main display and a projection-based display projecting visual content onto a wall behind the main display.

### [DETAILED DESCRIPTION OF THE DISCLOSURE]

### [Technical Solution]

According to an embodiment of the disclosure, a first electronic device is provided, as set out in accompanying claim 1.

According to an embodiment of the disclosure, a method that controls a first electronic device is provided, as set out in accompanying claim 9.

According to an embodiment of the disclosure, a computer readable recording medium is provided, as set out in accompanying claim 13.

### [BRIEF DESCRIPTION OF DRAWINGS]

FIG. 1 is a view of illustrating a system including a first electronic device displaying an image and a second electronic device projecting an image according to an embodiment;
FIG. 2 is a block diagram of illustrating a configuration of a first electronic device according to an embodiment;
FIG. 3 is a block diagram of illustrating a configuration of the first electronic device for providing a content in conjunction with a second electronic device according to an embodiment;
FIG. 4 is a view for describing a method of receiving an image captured by a second electronic device to obtain information about a projection surface according to an embodiment;
FIGS. 5 and 6 are views for describing a method of receiving information about a distance between a second electronic device and a projection surface from the second electronic device to obtain information about the projection surface according to an embodiment;
FIG. 7 is a view for describing a method of providing an effect of a sound field according to extension of a screen according to an embodiment;
FIG. 8 is a flow chart for describing a method of controlling brightness of an image displayed by a first electronic device and an image projected by a second electronic device according to an embodiment;
FIG. 9 is a flow chart for describing a method of controlling an image output timing displayed by a first electronic device and an image projecting timing projected by a second electronic device according to an embodiment;
FIG. 10 is a flow chart for describing a control method of a first electronic device providing an image content in conjunction with a second electronic device projecting an image according to an embodiment;
FIGS. 11 and 12 are views for describing an example of extending a screen in a width and height directions according to an embodiment;
FIG. 13 is a view for illustrating an example in which a first electronic device is positioned on a side area of a projecting surface according to an embodiment;
FIG. 14 is a view for describing an example of displaying an area of interest in an image of a content according to an embodiment;
FIG. 15 is a view for describing a system including a first electronic device and a plurality of second electronic devices according to an embodiment;
FIG. 16 is a sequence diagram for describing an example in which a first electronic device displaying an image and a second electronic device projecting an image provide a content according to an embodiment;
FIG. 17 is a sequence diagram for describing an example in which a first electronic device displaying an image and a second electronic device projecting an image provide a content through a control device according to an embodiment; and
FIG. 18 is a block diagram of specifically illustrating a configuration of a second electronic device according to an embodiment.

### [DETAILED DESCRIPTION OF EMBODIMENTS]

Specific embodiments will be illustrated in drawings, and the embodiments will be described in detail in the detailed description. With respect to the detailed description of the drawings, similar components may be designated by similar reference numerals.

In case it is determined that in describing the disclosure, detailed explanation of related known functions or features may unnecessarily confuse the gist of the disclosure, the detailed explanation will be omitted.

In addition, embodiments below may be modified in various different forms, and the scope of the technical spirit of the disclosure is not limited to the embodiments below. Rather, these embodiments are provided to make the disclosure more sufficient and complete, and to fully convey the technical idea of the disclosure to those skilled in the art.

The terms used in the disclosure are used only to explain specific embodiments, and are not intended to limit the scope of the disclosure. In addition, singular expressions include plural expressions, unless defined obviously differently in the context.

In the disclosure, expressions such as "have", "may have", "include", and "may include" denote the existence of such characteristics (e.g.: elements such as numbers, functions, operations, and components), and do not exclude the existence of additional characteristics.

In the disclosure, the expressions "A or B", "at least one of A and/or B" or "one or more of A and/or B", and the like may include all possible combinations of the listed items. For example, "A or B", "at least one of A and B", or "at least one of A or B" may refer to all of the following cases: (1) including at least one A, (2) including at least one B, or (3) including all of at least one A and at least one B.

Further, the expressions "1st", "2nd", "first", "second", or the like used in the disclosure may describe various elements regardless of any order and/or degree of importance. Also, such expressions are used only to distinguish one element from another element, and are not intended to limit the elements.

Meanwhile, the description in the disclosure that one element (e.g.: a first element) is "(operatively or communicatively) coupled with/to" or "connected to" another element (e.g.: a second element) should be interpreted to include both the case where the one element is directly coupled to the another element, and the case where the one element is coupled to the another element through the other element (e.g.: a third element).

In contrast, the description that one element (e.g.: a first element) is "directly coupled" or "directly connected" to another element (e.g.: a second element) may be interpreted to mean that the other element (e.g.: a third element) does not exist between the one element and the another element.

Also, the expression "configured to (set to)" used in the disclosure may be interchangeably used with other expressions such as "suitable for," "having the capacity to," "designed to," "adapted to," "made to," and "capable of," depending on cases. Meanwhile, the term "configured to (or set to)" may not necessarily mean "specifically designed to" in terms of hardware.

Instead, under some circumstances, the expression "a device configured to" may mean that the device "is capable of' performing an operation together with another device or component. For example, the phrase "a processor configured to (set to) perform A, B, and C" may mean a generic-purpose processor (e.g.: a CPU or an application processor) that can perform the corresponding operations by executing one or more software programs stored in a memory device.

In the embodiments of the disclosure, 'a module' or 'a part' may perform at least one function or operation, and may be implemented as hardware or software, or as a combination of hardware and software. In addition, a plurality of 'modules' or 'parts' may be integrated into at least one module and implemented as at least one processor, excluding 'a module' or 'a part' that needs to be implemented as specific hardware.

Various elements and areas in drawings are illustrated schematically.

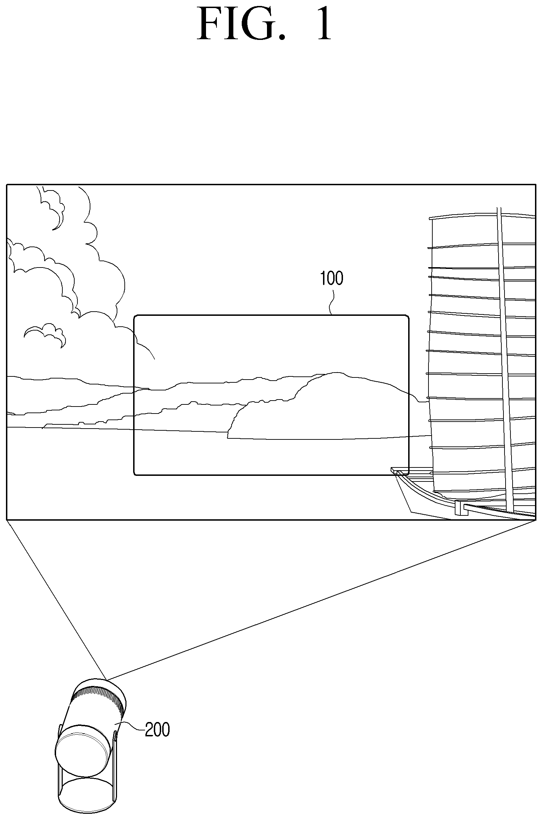

Hereinafter, various embodiments of the disclosure are specifically described based on the attached drawings. FIG. 1 is a view of illustrating a system including a first electronic device displaying an image and a second electronic device projecting an image according to an embodiment. According to an embodiment of the disclosure, a first electronic device 100 may include a display and may be a display device such as a TV providing an image through the display. A second electronic device 200 may be an image projecting device such as a projector projecting an image on a wall or a screen. Also, the first electronic device 100 may operate as a main device and the second electronic device 200 may operate as a secondary device. However, the disclosure is not limited thereto.

The first electronic device 100 may be installed on a wall at home and display an image. The second electronic device 200 may project an image on a wall on which the first electronic device 100 is installed. In particular, as shown in FIG. 1, the first electronic device 100 may be positioned at an area of the image projected by the second electronic device 200.

The first electronic device 100 obtains information about a projection surface to which the second electronic device 200 projects an image. Further, the first electronic device 100 segments an input image of a content into a first area and a second area based on information about the projection surface and information about the first electronic device 100. Still further, the first electronic device 100 displays part of the image based on information about the first area in the image and transmits information about the second area to the second electronic device 200. The second electronic device 200 may display the other part of the image based on information about the second area.

Also, the first electronic device 100 may segment not only the image of the content but also an audio of the content based on information about the projection surface and information about a position of the second electronic device 200. Part of the segmented audio may be output through the first electronic device 100 and the other part of the audio may be output through the second electronic device 200.

As a result, the first electronic device 100 may provide one content in conjunction with the second electronic device 200 projecting an image as shown in FIG. 1.

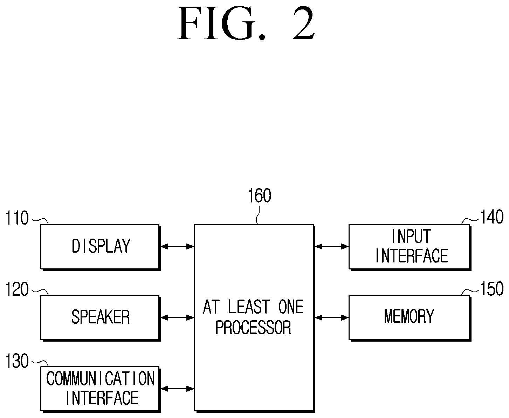

FIG. 2 is a block diagram of illustrating a configuration of the first electronic device 100 according to an embodiment. As shown in FIG. 2, the first electronic device 100 includes a display 110, a speaker 120, a communication interface 130, an input interface 140, memory 150, and at least one processor 160. However, a configuration of the first electronic device 100 shown in FIG. 2 is merely one of examples, wherein it is obvious that another configuration may be added thereto or part of the configuration may be omitted.

The display 110 may display various information. In particular, the display 110 may display part of an image of a content when displaying the content in conjunction with the second electronic device 200 projecting an image. Also, the display 110 may display a screen of the preset color or a screen changing to the preset panel to synchronize with the conjunctive second electronic device.

Meanwhile, the display 110 may be realized as a liquid crystal display panel (LCD), organic light emitting diodes (OLED), etc. Also, the display 110 may be realized as a flexible display, a transparent display, or the like in some cases. However, the display 110 according to the disclosure is not limited to a specific type.

The speaker 120 may output various voice messages and audios. In particular, the speaker 130 may output audios of a content obtained based on information about the first electronic device 100 and the second electronic device 200 when providing a content in conjunction with the second electronic device 200.

The communication interface 130 may include at least one circuit and may perform communication with various types of second electronic devices 200. The communication interface 130 may include at least one of a Bluetooth low energy module, a Wi-Fi communication module, a cellular communication module, a 3rd generation (3G) mobile communication module, a 4th generation (4G) mobile communication module, a 4G long term evolution (LTE) communication module, or a 5th generation (5G) mobile communication module.

In particular, the communication interface 130 may receive information about the second electronic device 200 and information about the projection surface from the second electronic device 200 when providing a content in conjunction with the second electronic device 200.

Meanwhile, the aforementioned embodiments describe performing communication connection with external equipment through a wireless communication module but it is obvious that it is possible to perform communication connection with the external equipment through a wired communication module.

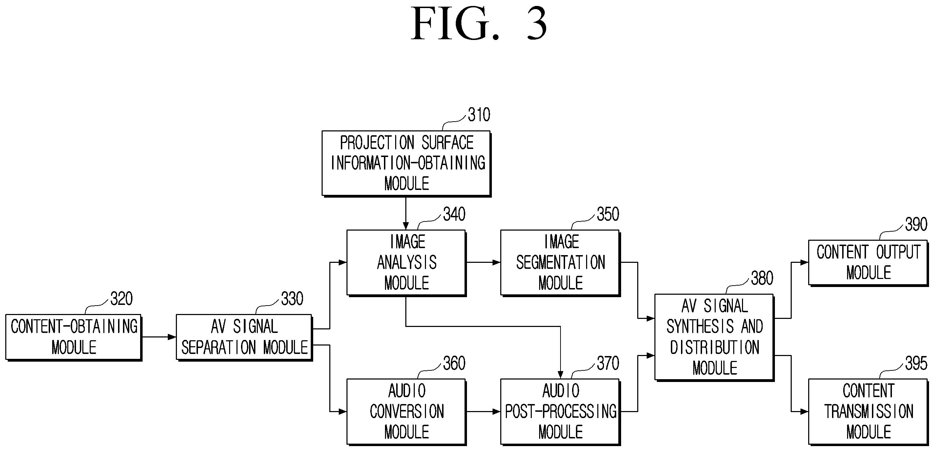

The memory 150 may store an operating system (OS) for controlling overall operations of components of the first electronic device 100 and instructions or data related to components of the first electronic device 100. In particular, the memory 150 may include a projection surface information-obtaining module 310, a content-obtaining module 320, an AV signal separation module 330, an image analysis module 340, an image segmentation module 350, an audio conversion module 360, an audio post-processing module 370, an AV signal synthesis and distribution module 380, a content output module 390, and a content transmission module 395 to provide a content in conjunction with the second electronic device 200 as shown in FIG. 3. In particular, if a function for providing a content in conjunction with the second electronic device is implemented, various modules for providing a content in conjunction with the second electronic device stored in non-volatile memory may load data for performing various operations onto volatile memory. Here, loading means an operation of calling data stored in non-volatile memory to volatile memory and storing the data in order that at least one processor 160 may access the data.

Meanwhile, the memory 150 may be realized as non-volatile memory (e.g. a hard disk, a solid state drive (SSD), flash memory), volatile memory (memory within at least one processor 150 may be also included), etc.

The at least one processor 160 may control the first electronic device 100 according to at least one instructions stored in the memory 150. In particular, the at least one processor 160 obtains information about the projection surface to which the second electronic device projects an image. Further, the least one processor 160 segments an input image into a first area and a second area based on information about the projection surface and information about the first electronic device 100. Still further, the least one processor 160 controls the display 110 to display part of the image and controls the communication interface 140 to transmit information about the second area of the image to the second electronic device based on information about the first area of the image.

Specifically, the at least one processor 160 may receive an image of the projection surface photographed by a camera included in the second electronic device through the communication interface 140. Further, the at least one processor 160 may identify an area where the first electronic device 100 is positioned on the projection surface based on an image about the obtained projection surface. Further, the at least one processor 160 is configured to identify an area corresponding to the area where the first electronic device 100 is positioned on the projection surface of the obtained image as the first area and identify the other areas excluding the first area in the obtained image as the second area.

Also, the at least one processor 160 may receive information about a distance between the second electronic device and the projection surface through a distance sensor included in the second electronic device. Further, the at least one processor 160 may obtain information about a size and a location of the projection surface based on the information about the distance between the second electronic device and the projection surface. Still further, the at least one processor 160 may segment an input image into a first area and a second area based on information about the size and the location of the projection surface.

The at least one processor 160 may convert a channel of an audio corresponding to an input image to a channel corresponding to an output specification of the second electronic device and the first electronic device 100. Further, the at least one processor 160 may map the audio to the converted channel based on information about a location of the second electronic device. Here, the at least one processor 160 may analyze an image projected to the projection surface and may perform post-processing on the audio per the converted channel.

The at least one processor 160 may control the display 110 to display a screen of the preset color in the first electronic device and control the communication interface 140 to transmit a control command for projecting a screen of the preset color to the second electronic device 200. Further, the at least one processor 160 may receive an image capturing the screen of the preset color displayed by the first electronic device 100 and the screen of the preset color projected by the second electronic device 200, from the second electronic device 200 through the communication interface 140. Still further, the at least one processor 160 may control brightness of at least one of a screen output by the first electronic device 100 or a screen projected by the second electronic device 200 based on the image received from the second electronic device 200.

The at least one processor 160 may control the display 110 to display a screen which changes to a pattern preset in the first electronic device 100 and control the communication interface 140 to transmit a control command to project a screen which changes to the preset pattern, to the second electronic device 200. Further, the at least one processor 160 may receive an image capturing a screen changing to the preset pattern displayed by the first electronic device 100 and a screen changing to the preset pattern projected by the second electronic device, from the second electronic device 200 through the communication interface 110. Still further, the at least one processor 160 may control at least one of an image output timing of the first electronic device 100 or an image projecting timing of the second electronic device 200 based on the image received from the second electronic device 200 to adjust the image output timing of the first electronic device 100 to match with the image projecting timing of the second electronic device 200.

The at least one processor 160 may determine whether to segment the image into the first area and the second area based on flag information indicating whether the image included metadata of the input image is segmented.

Also, the at least one processor 160 may operate at one of a first mode which displays the input image in the first electronic device 100 and a second mode which segments and displays the input image through the first and second electronic devices

In particular, the at least one processor 160 may load data for performing various operations shown in modules (at least one of the projection surface information-obtaining module 310, the content-obtaining module 320, the AV signal separation module 330, the image analysis module 340, the image segmentation module 350, the audio conversion module 360, the audio post-processing module 370, the AV signal synthesis and distribution module 380, the content output module 390, or the content transmission module 395) stored in non-volatile memory onto the volatile memory. A method in which the at least one processor 160 provides a content in conjunction with the second electronic device through a plurality of components is specifically described with reference to FIG. 3. FIG. 3 is a block diagram of illustrating a configuration of the first electronic device for providing a content in conjunction with the second electronic device according to an embodiment.

The projection surface information-obtaining module 310 may obtain information about the projection surface based on information received from the second electronic device 200. Further, the projection surface information-obtaining module 310 may identify an area where the first electronic device 100 is positioned on the projection surface, and the other areas excluding that of the first electronic device 100.

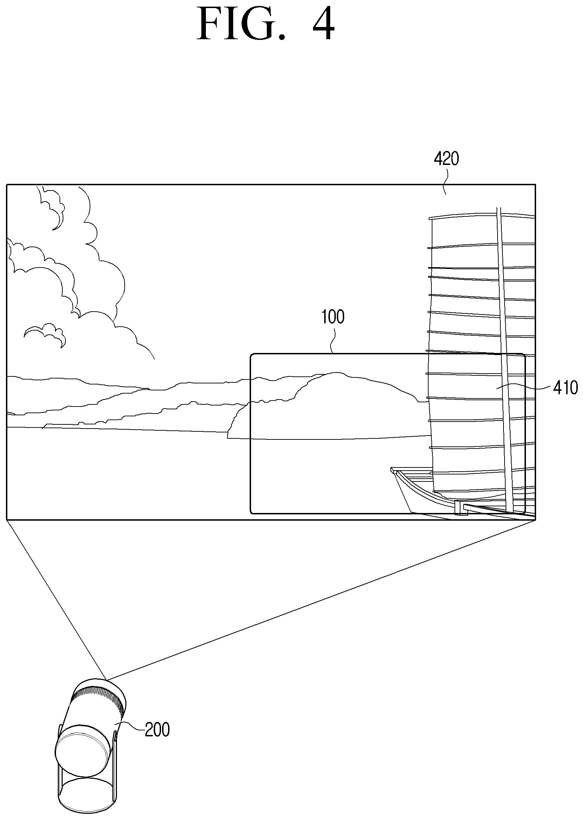

Specifically, the projection surface information-obtaining module 310 may receive an image capturing the projection surface including the first electronic device 100 from the second electronic device 200. Further, the projection surface information-obtaining module 310 may identify an area occupied by a display of the first electronic device 100 on the projection surface based on an image about the obtained projection surface. For example, as shown in FIG. 4, the second electronic device 200 may obtain an image by capturing the projection surface including the first electronic device 100. Further, the second electronic device 200 may transmit the obtained image to the first electronic device 100. The first electronic device 100 may identify an area 410 where the first electronic device 100 is positioned on the projection surface and the other areas 420 excluding that of the first electronic device 100 based on the received image.

Meanwhile, in the aforementioned embodiment, it is described to receive an image capturing the projecting surface including the first electronic device 100 from the second electronic device 200. However, it is merely one of examples. An image capturing the projection surface including the first electronic device 100 may be received by a mobile terminal (e.g. a smart phone) having a camera. Specifically, if the first electronic device 100 and the second electronic device 200 is in conjunction with an external mobile terminal, information (including the captured image) about the projection surface projected by the second electronic device 200 may be received by using an application installed in the mobile terminal.

Also, the projection surface information-obtaining module 310 may receive information about a distance between the second electronic device 200 and the projection surface via a distance sensor included in the second electronic device 200, from the second electronic device 200 through the communication interface 140. Further, the projection surface information-obtaining module 310 may obtain information about a size and a location of the projection surface based on the information about the second electronic device 200 and the projection surface and information about the first electronic device 100. Here, the information about the size and the location of the projection surface according to a distance between the second electronic device 200 and the projection surface may be previously stored. Also, the area where the first electronic device 100 is positioned on the projection surface may be fixed to the preset location (e.g. a center area, etc.).

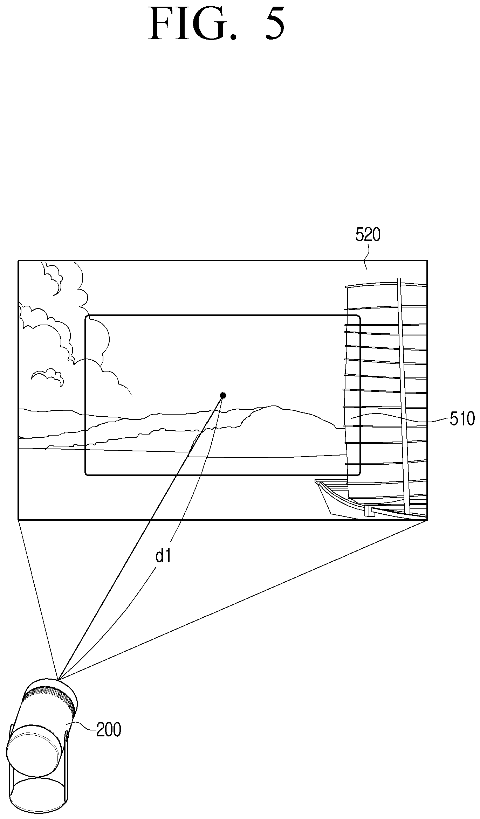

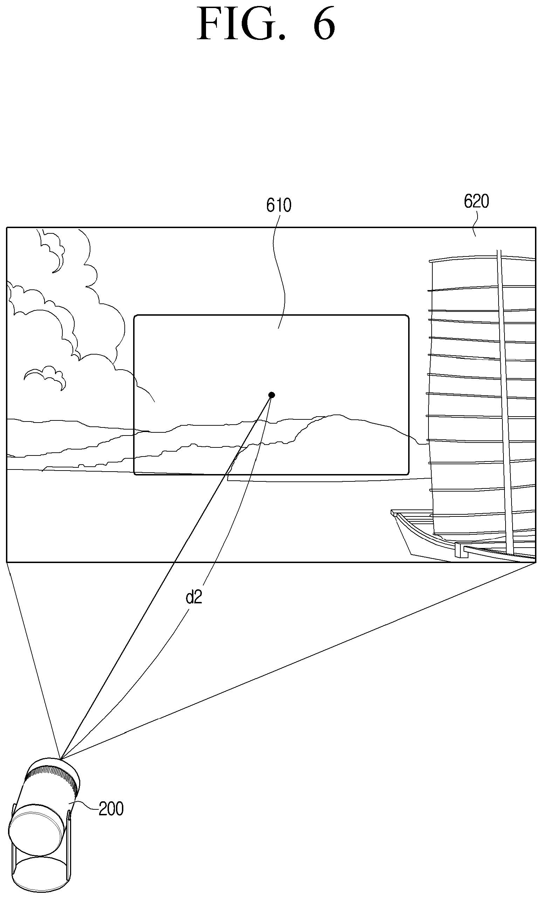

For example, as shown in FIG. 5, if a distance between the second electronic device 200 and the projection surface is d₁, the projection surface information-obtaining module 310 may identify a size and a location of a first projection surface corresponding to the distance d₁ between the second electronic device 200 and the projection surface based on the previously stored information. Further, the projection surface information-obtaining module 310 may identify an area 510 where the first electronic device 100 is positioned and the other areas 520 excluding that of the first electronic device 100 based on the size and the location of the first projection surface. In particular, the projection surface information-obtaining module 310 may identify the area 510 where the first electronic device 100 is positioned and the other areas 520 excluding that of the first electronic device 100 based on the size and the location of the first projection surface and the previously stored size and location of the first electronic device 100. As shown in FIG. 6, if a distance between the second electronic device 200 and the projection surface is d₂, which is longer than d₁, the projection surface information-obtaining module 310 may identify a size and a location of a second projection surface corresponding to the distance d₂ between the second electronic device 200 and the projection surface based on the previously stored information. Further, the projection surface information-obtaining module 310 may identify an area 610 where the first electronic device 100 is positioned and the other areas 620 excluding that of the first electronic device 100 based on the size and the location of the second projection surface.

Besides, the projection surface information-obtaining module 310 may store information about the first electronic device 100 (e.g. information about a display size, information about resolution, information about a speaker, etc.) and information about the second electronic device 200 (e.g. information about a speaker, etc.).

The content-obtaining module 320 may obtain various contents. For example, the content-obtaining module 320 may obtain the contents through the communication interface 140. Also, the content-obtaining module 320 may obtain the contents from the second electronic device through a wired input/output (I/O) interface (e.g. a HDMI terminal, etc.). The content-obtaining module 320 may obtain the contents stored in the first electronic device 100. Here, the contents may include an image signal and an audio signal.

The AV signal separation module 330 may separate an image signal and an audio signal included in a content. Further, the AV signal separation module 330 may input the image signal to the image analysis module 340 and may input the audio signal to the audio conversion module 360.

The image analysis module 340 may analyze the input image signal through the AV signal separation module 330. Here, the image analysis module 340 may determine an expansion ratio, a crop area, and information about a location of a main object in the image signal based on information about the first electronic device 100 and information about the projection surface. Specifically, the image analysis module 340 may determine an expansion ratio of the image inputted based on an aspect ratio and a size of the projection surface. For example, a size of the display is 55 inches and a size of the projection surface is 110 inches, the image analysis module 340 may determine the expansion ratio of double. Also, if it is required to display the main object within the image in the first electronic device 100, the image analysis module 340 may analyze the image signal to determine information about a location of the main object and determine a crop area of the image resulting from moving a display area of the main object to the first electronic device 100.

The image segmentation module 350 may segment an image based on a result of analysis obtained by the image analysis module 340 and information about the projection surface. Specifically, the image segmentation module 350 may segment the image processed by the image analysis module 340 into a first area and a second area. Here, the first area may correspond to an area where the first electronic device 100 is positioned and which is identified by the projection surface information-obtaining module 310. The second area may correspond to the other areas (i.e. the other areas excluding the first area) excluding that of the first electronic device 100 identified by the projection surface information-obtaining module 310. That is, the image segmentation module 350 may segment the image processed by the image analysis module 340 into an image of the first area to be displayed by the first electronic device 100 and an image of the second area projected by the second electronic device 200. Accordingly, the image segmentation module 350 may obtain a first image signal to output an image about the first area and a second image signal to output an image about the second area.

Here, the image segmentation module 350 may determine information (e.g. brightness, color, a contrast ratio, etc.) about an image to be displayed by the first electronic device 100 and determine information (e.g. brightness, color, a contrast ratio, etc.) about an image to be projected by the second electronic device 200. In particular, the image segmentation module 350 may determine to project light having the preset brightness (e.g. black) with respect to the first area (i.e. the area where the first electronic device 100 is positioned) of the image projected by the second electronic device 200 to minimize interruption of watching the image displayed by the first electronic device 100.

Also, the image segmentation module 350 may perform image processing with respect to at least one boundary area of the first area and the second area divided not to disparately display boundaries of the first area and the second area. For example, the image segmentation module 350 may process at least one of the first area or the second area to display an average pixel of the first area and the second area on at least one boundary area of the first area and the second area. Also, the image segmentation module 350 may process the boundary area of the second area such that its luminance gradually increases as it is close to the first area. That is, in general, luminance of the first electronic device 100 is brighter than that of the second electronic device 200 and thus the image segmentation module 350 may process the boundary area of the second area such that its luminance gradually increases as it is close to the first area (or the first electronic device 100). Also, the image segmentation module 350 may process the boundary area of the second area to extend it in a direction of the first area to overlap the second area with the first area.

The audio conversion module 360 may convert a channel of the audio signal of a content to a channel corresponding to an output specification of the second electronic device 200 and the first electronic device 100. Specifically, if a configuration is possible such that a channel of an audio signal of a content is a 2.1 channel and an output specification of the second electronic device 200 and the first electronic device 100 is a 5.1 channel, the audio conversion module 360 may upscale the audio signal from the 2.1 channel to the 5.1 channel. Accordingly, the second electronic device 200 and the first electronic device 100 may output the audio of the 5.1 channel. Otherwise, if the channel of the audio signal of a content is a 5.1 channel and an output specification of the second electronic device 200 and the first electronic device 100 is a 2.1 channel, the audio conversion module 360 may downscale the audio signal from the 5.1 channel to the 2.1 channel.

In addition, the audio conversion module 360 may map the audio signal to the converted channel based on information about a location of the second electronic device 200. For, example, if the second electronic device 200 outputs an audio signal corresponding to a woofer channel of a plurality of channels, the audio conversion module 360 may process the audio signal of the woofer channel according to a location of the second electronic device 200.

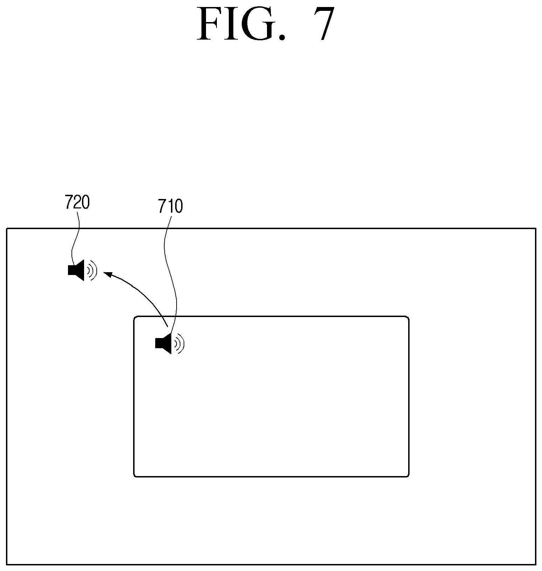

The audio post-processing module 370 may analyze an image projected on the projection surface to perform post-processing of the audio signal per the converted channel. Specifically, the audio post-processing module 370 may analyze the image projected to the projection surface to perform post-processing of an audio per the converted channel so as to provide an effect of a sound field according to extension of the image. For example, if an image is displayed on the display 110 of the first electronic device 100, an audio (e.g. a sound of gunshots) may be generated at a first point 710 of the left top of the display 110 as shown in FIG. 7. Here, if the image is extended to the projection surface projected by the second electronic device 200 and the audio is continuously generated at the first point 710, the audio is heard such that it is generated in the center rather than the left top of the screen. Accordingly, there may be disparity between the image and the audio. Therefore, the audio post-processing module 370 may perform post-processing of the audio signal per channel to cause the audio to be generated at a second point 720 which is the left top of the projection surface rather than the first point 710 based on a result (e.g. an extension ratio, etc.) of analyzing an image projected on the projection surface.

The audio post-processing module 370 may obtain a first audio signal to be output by the first electronic device 100 and a second audio signal to be output by the second electronic device 200 based on a result of post-processing.

The AV signal synthesis and distribution module 380 may synthesize a first image signal and a second image signal obtained by the image segmentation module 350 and a first audio signal and a second audio signal obtained by the audio post-processing module 370. Specifically, the AV signal synthesis and distribution module 380 may synthesize the first image signal and the first audio signal as a first content to be provided by the first electronic device 100 and may synthesize the second image signal and the second audio signal as a second content to be provided by the second electronic device 200.

Here, the AV signal synthesis and distribution module 380 may synchronize the first and second image signals and the first and second audio signals and may correct the first and second image signals and the first and second audio signals according to an output difference (e.g. resolution, a gain value, etc.) between the first electronic device 100 and the second electronic device 200.

The content output module 390 may output a first content output from the AV signal synthesis and distribution module 380. Specifically, the content output module 390 may display part of the image by displaying the first image signal of the first content through the display 110 and may output the first audio signal of the first content through the speaker 120.

The content transmission module 395 may transmit the second content output from the AV signal synthesis and distribution module 380 to the second electronic device 200. Here, the second electronic device 200 may project the second image signal of the second content on the projection surface to project part of the other image and may output the second audio signal of the second content through the speaker.

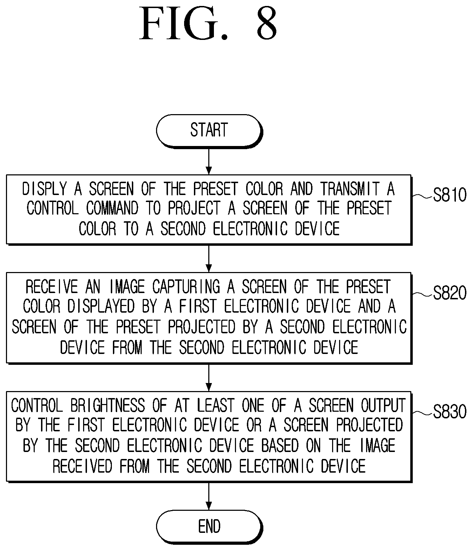

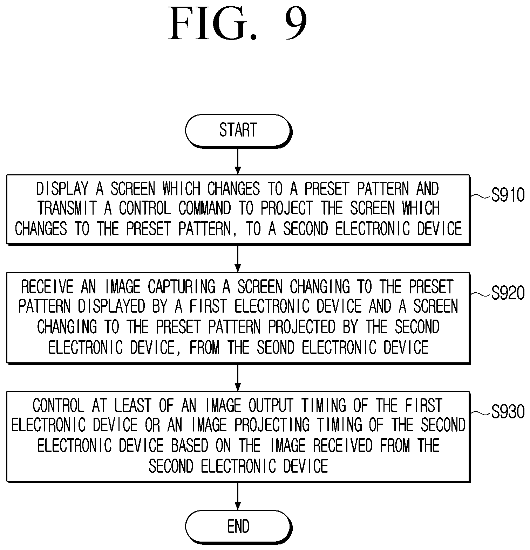

In particular, the first electronic device 100 according to an embodiment of the disclosure may enter into a synchronization mode for synchronizing an image displayed by the first electronic device 100 and an image projected by the second electronic device 200 before the first electronic device 100 provides a content in conjunction with the second electronic device 200. With respect to the above, it is described with reference to FIGS. 8 and 9.

FIG. 8 is a flow chart for describing a method of controlling brightness of an image displayed by a first electronic device and an image projected by a second electronic device according to an embodiment.

First, a first electronic device 100 may display a screen of the preset color in the first electronic device 100 and may transmit a control command to project a screen of the preset color to the second electronic device 200 (S810). Here, the screen of the preset color displayed by the first electronic device 100 and a screen of the preset color projected by the second electronic device 200 may be a white screen. However, it is merely one of examples and it may be a screen of another color (e.g. yellow, etc.).

The first electronic device 100 may receive an image capturing the screen of the preset color displayed by the first electronic device 100 and the screen of the preset color projected by the second electronic device 200 from the second electronic device 200 (S820). Specifically, the second electronic device 200 may capture the projection surface including the screen of the preset color projected by the second electronic device 200 and the screen of the preset color displayed by the first electronic device 100. Further, the second electronic device 200 may transmit the captured image to the first electronic device 100.

The first electronic device 100 may control brightness of at least one of a screen output by the first electronic device 100 or a screen projected by the second electronic device 200 based on the image received from the second electronic device 200 (S830). Specifically, the screen of the preset color displayed by the first electronic device 100 and the screen of the preset color projected by the second electronic device 200 may have different brightness according to a specification of the display of the first electronic device 100, a specification of a projection part of the second electronic device 200, an external environment (e.g. an indoor lighting environment), etc. Accordingly, the first electronic device 100 may obtain a brightness ratio (or a value of a difference in brightness) of a screen output by the first electronic device 100 and a screen projected by the second electronic device 200 included in the image. The first electronic device 100 may control brightness of at least one of the screen output by the first electronic device 100 or the screen projected by the second electronic device 200 based on the obtained brightness ratio (or the value of the difference in brightness). For example, if brightness of the screen output by the first electronic device 100 is 1.25 times brighter than the screen projected by the second electronic device 200, the first electronic device 100 may transmit a control command for 20% reducing brightness of the screen output by the first electronic device 100 or 25% increasing brightness of the screen projected by the second electronic device 200, to the second electronic device 200.

Due to the above, the user may identically recognize brightness of the screen displayed by the first electronic device 100 and brightness of the screen projected by the second electronic device 200.

FIG. 9 is a flow chart for describing a method of controlling an image output timing displayed by a first electronic device and an image projecting timing projected by a second electronic device according to an embodiment.

First, the first electronic device 100 may display a screen which changes to a pattern preset in the first electronic device 100 and may transmit a control command to project a screen which changes to the preset pattern, to the second electronic device 200 (S910). Here, the screen which changes to the preset pattern may be a screen to which an edge of a triangle is added one by one but the disclosure is not limited thereto.

The first electronic device 100 may receive an image capturing a screen changing to the preset pattern displayed by the first electronic device 100 and a screen changing to the preset pattern projected by the second electronic device 200, from the second electronic device 200 (S920). Specifically, the second electronic device 200 may capture a projection surface including the screen changing to the preset pattern projected by the second electronic device 200 and the screen changing to the preset pattern displayed by the first electronic device 100. Further, the second electronic device 200 may transmit the captured image to the first electronic device 100.

The first electronic device 100 may control at least one of an image output timing of the first electronic device 100 or an image projecting timing of the second electronic device 200 based on the image received from the second electronic device 200 (S930). Specifically, the patterns in the screen changing to the preset pattern displayed by the first electronic device 100 and the screen changing to the preset pattern projected by the second electronic device 200 may change in different timings due to a communication environment, etc. Therefore, the first electronic device 100 may confirm whether patterns in the screen output by the first electronic device 100 and the screen projected by the second electronic device 200 included in the image identically change. If the patterns does not change identically, the first electronic device 100 may identify a time difference between time in that the patterns in the screen output by the first electronic device 100 change and time in that the screen projected by the second electronic device 200 included in the image changes. The first electronic device 100 may control at least one of an image output timing of the screen output by the first electronic device 100 or an image projecting timing of the screen projected by the second electronic device 200 based on the obtained time difference. For example, if the screen output by the first electronic device 100 is 1 second faster than the screen projected by the second electronic device 200, the first electronic device 100 may control the image output timing of the screen output by the first electronic device 100 to be 1 second slower.

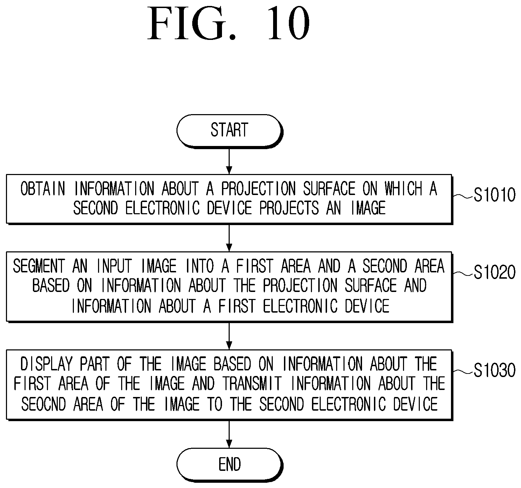

FIG. 10 is a flow chart for describing a control method of a first electronic device providing an image content in conjunction with a second electronic device projecting an image according to an embodiment.

First, the first electronic device 100 obtains information about a projection surface on which the second electronic device 200 projects an image (S1010). Specifically, the first electronic device 100 may obtain an image about the projection surface captured by a camera included in the second electronic device 200 and may identify an area where the first electronic device 100 is positioned on the projection surface based on the image about the obtained projection surface. Otherwise, the first electronic device 100 may obtain information about a distance between the second electronic device 200 and the projection surface through a distance sensor included in the second electronic device 200 and may obtain information about a size and a location of the projection surface based on the information about the distance between the second electronic device 200 and the projection surface.

Further, the first electronic device 100 segments an input image into a first area and a second area based on information about the projection surface and information about the first electronic device 100 (S1020). Specifically, the first electronic device 100 may identify an area corresponding to the area the first electronic device 100 is positioned on the projection surface of the obtained image as a first area and may identify the other areas excluding the first area of the obtained image as a second area. Otherwise, the first electronic device 100 may segment the input image into the first area and the second area based on information about the size and the location of the projection surface.

The first electronic device 100 displays part of the image based on information about the first area of the image and transmits information about the second area of the image to the second electronic device 200 (S1030).

Also, the first electronic device 100 converts a channel of an audio corresponding to an input image to a channel corresponding to an output specification of the second electronic device 200 and the first electronic device 100. Further, the first electronic device 100 maps the audio to the converted channel based on information about a location of the second electronic device 200. Still further, the first electronic device 100 analyzes an image projected on the projection surface to perform post-processing of the audio per the converted channel.

Also, the first electronic device 100 may display a screen of the preset color in the first electronic device 100 and may transmit a control command for projecting the screen of the preset color to the second electronic device 200. Further, the first electronic device 100 may receive an image capturing the screen of the preset color displayed by the first electronic device 100 and the screen of the preset color projected by the second electronic device 200, from the second electronic device 200. Still further, the first electronic device 100 may control brightness of at least one of the screen output by the first electronic device 100 or the screen projected by the second electronic device 200 based on the image received from the second electronic device 200.

Also, the first electronic device 100 may display the screen changing to the preset pattern in the first electronic device 100 and may transmit a control command for projecting the screen changing to the preset pattern, to the second electronic device 200. Further, the first electronic device 100 may receive an image capturing the screen of the preset color displayed by the first electronic device 100 and the screen of the preset color projected by the second electronic device 200, from the second electronic device 200. Still further, the first electronic device 100 may control at least one of an image output timing of the first electronic device 100 or an image projecting timing of the second electronic device 200 based on the image received from the second electronic device 200.

Meanwhile, the first electronic device 100 according to an embodiment of the disclosure may provide various modes by using the second electronic device projecting an image.

Specifically, the first electronic device 100 may operate at a first mode (e.g. a concentration mode) for controlling such that the second electronic device 200 projecting an image onto a background area outside the first electronic device 100 may project the image having a specific color or a pattern.

Otherwise, the first electronic device 100 may operate at a second mode (e.g. an extension mode) for controlling such that the first electronic device 100 displays part of the image and the second electronic device 200 projects part of the other image in order that a viewer who watches a content may watch a content on a large screen as described in FIGS. 1 to 10.

Otherwise, if the first electronic device 100 is used in connection with an external audio device (e.g. a sound bar), the first electronic device 100 may operate at a third mode (e.g. a sound reinforcement mode) for causing the first electronic device 100 and the second electronic device 200 to segment and play an image of a content and playing an audio of a content in conjunction with an external audio device.

Meanwhile, the content disclosed in the aforementioned embodiment may include metadata including flag information indicating whether the image is segmented. Accordingly, the first electronic device 100 may determine whether to segment the image into the first area and the second area based on the flag information. That is, the first electronic device 100 may determine whether to segment the image per scene based on the flag information. For example, if a first scene of the content includes the flag information indicating image segmentation, the first electronic device 100 may segment an image and an audio in the first scene of the content and then together with the second electronic device 200, may provide the content. If a second section of the content includes flag information indicating image maintenance, the first electronic device 100 may provide the content in the second scene of the content through the first electronic device 100. As the above, a content provider may determine whether to extend and provide the image per scene included in the content, thereby providing the content through various screen sizes according to characteristics of types of the scenes to provide a vivider content.

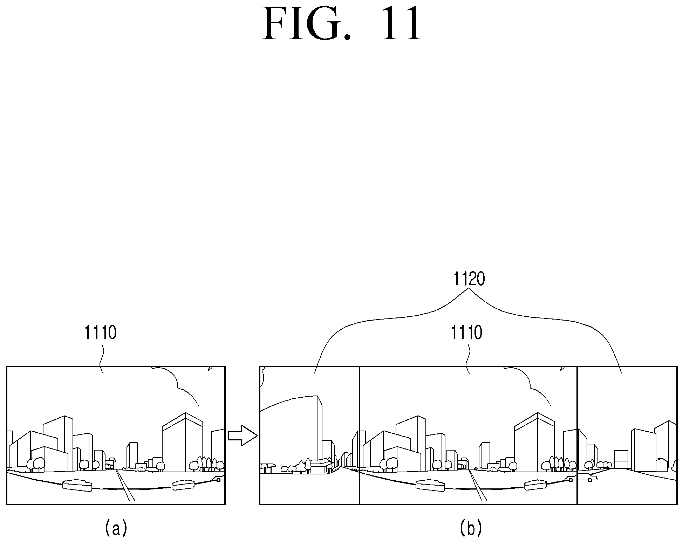

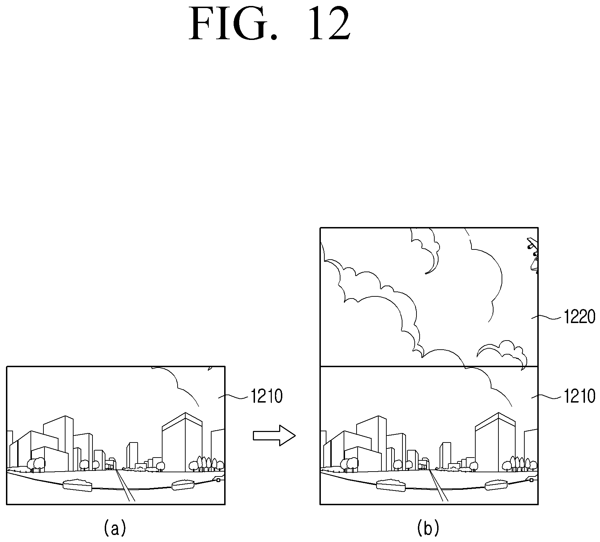

Meanwhile, it is described in the aforementioned embodiment that the first electronic device 100 may maintain a ratio of the image to be displayed and extend a size thereof wherein the first electronic device 100 displays part of the image and the second electronic device 200 projects part of the other image. However, it is merely one of example. The first electronic device 100 may maintain an original of the image to be displayed and the second electronic device 200 may project an additional image in which the image is extended to the right and left or the top and bottom. With respect to the above, it is described with reference to FIGS. 11 and 12.

FIGS. 11 and 12 are views for describing an example of extending a screen in a width and height directions according to an embodiment.

The first electronic device 100 may display an image 1110 of a content in an original ratio as shown in (a) of FIG. 11. Thereafter, if flag information for image extension in a horizontal direction is included in metadata of the content, the first electronic device 100 may obtain an additional image of the content and may transmit information about the obtained additional image to the second electronic device 200. The second electronic device 200 may project additional images 1120 onto surroundings of the right and left of the first electronic device 100 as shown in (b) of FIG. 11. Here, the image and the additional images may provide one screen and the one screen may be extended in a horizontal direction compared to the existing image 1110.

The first electronic device 100 may display an image 1210 of a content in an original ratio as shown in (a) of FIG. 12. Thereafter, flag information for image extension in a vertical direction is included in metadata of the content, the first electronic device 100 may obtain an additional image of the content and may transmit information about the obtained additional image to the second electronic device 200. The second electronic device 200 may project an additional image 1220 onto surroundings of the top of the first electronic device 100. Here, the image and the additional image may be one screen and the one screen may be extended in a vertical direction compared to the existing image 1110. Here, it is determined whether the second electronic device 200 projects the image in the horizontal direction of the image or projects the image in the vertical direction thereof based on a type of the scene or flag information.

As aforementioned, the first electronic device 100 maintains a ratio of the image to be provided and extends the screen and thus the viewer may be provided with a vivider content based on more extended images.

Meanwhile, the aforementioned embodiment describes that the second electronic device 200 projects part of a content. However, it is merely one of examples and the second electronic device 200 may project an image or information related to a content provided by the first electronic device 100. Specifically, the first electronic device 100 may recognize a content provided by the first electronic device 100. Here, the first electronic device 100 may recognize a content currently provided by using an artificial intelligence (AI) model for recognizing a scene. The first electronic device 100 may transmit information about the recognized content to an external server and may obtain information or an image related to the obtained content. Further, the first electronic device 100 may transmit a control command in order that the second electronic device 200 projects the information or the image related to the obtained content. Accordingly, the second electronic device 200 may project information related to the content currently provided by the first electronic device 100 or the related image (e.g. an advertisement image, etc.).

That is, the first electronic device 100 may not directly transfer additional information such as metadata to the second electronic device 200 but may recognize a content and control the second electronic device 200 to provide information or an image related to the obtained content based on the recognized information.

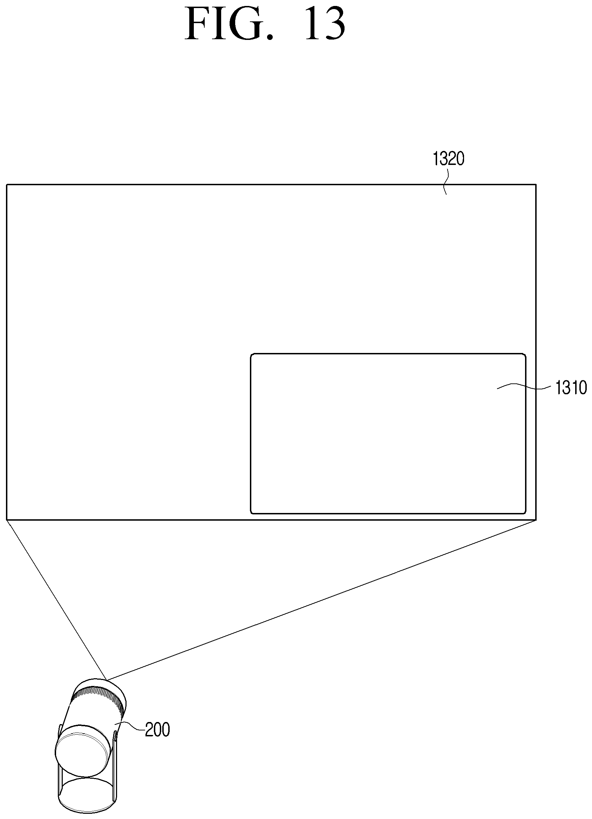

Meanwhile, the aforementioned embodiment describes that the area where the first electronic device 100 is positioned is a center area of the projection surface. However, it is merely one of examples and the first electronic device 100 may be positioned at various areas of the projection surface. For example, an area 1310 where the first electronic device is positioned may be positioned on a side area of the projection surface. Here, the first electronic device 100 may identify an area occupied by the display of the first electronic device 100 on the projection based on an image about the obtained projection. For example, the second electronic device 200 may capture the projection surface including the first electronic device 100 positioned at the side area of the projection surface to obtain an image as shown in FIG. 13. Further, the second electronic device 200 may transmit the obtained image to the first electronic device 100. The first electronic device 100 may identify an area 1310 where the first electronic device 100 is positioned on the projection surface and the other area 1320 excluding that of the first electronic device 100 based on the received image.

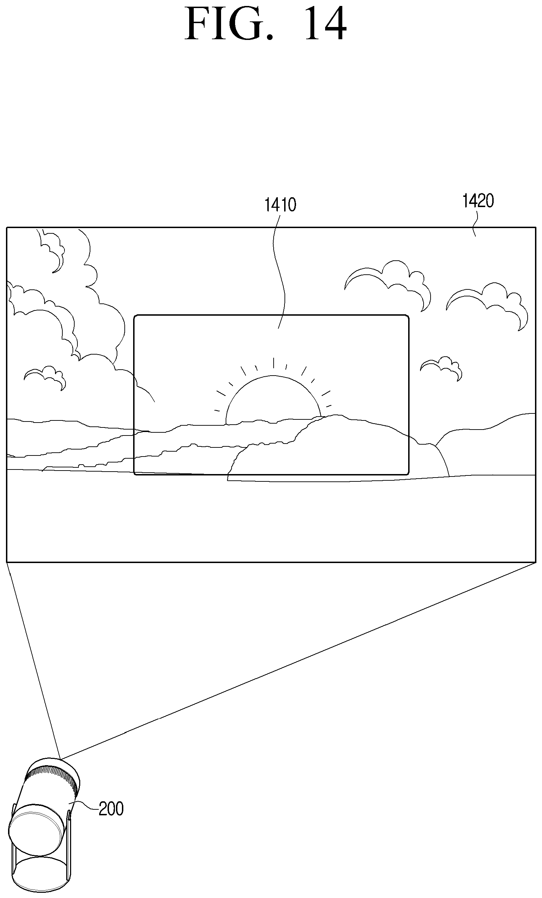

Meanwhile, the aforementioned embodiment describes that the first electronic device 100 displays part of the image of the content according to an area where the first electronic device 100 is positioned. However, it is merely one of examples and the first electronic device 100 may display an area of interest in the image of the content. Specifically, the first electronic device 100 may determine the area of interest (an area where a main object or a person is positioned) in the input image of the content. Further, the first electronic device 100 may segment the image of the content based on the area where the first electronic device 100 is positioned and the other areas excluding that of the first electronic device 100 and the area of interest in the image of the content. That is, the first electronic device 100 may display the area of interest in the image of the content on the area where the first electronic device 100 is positioned and may transmit information about the other areas excluding the area of interest to the second electronic device 200. For example, the first electronic device 100 may display an area of interest (e.g. an area where the sun is positioned) in the content and the second electronic device 200 may project the other area 1420 excluding the area of interest based on information about the other areas excluding the area of interest as shown in FIG. 14. Here, the first electronic device 100 may control a size of the image of the content according to a location of the area of interest or may crop a partial area of the image of the content.

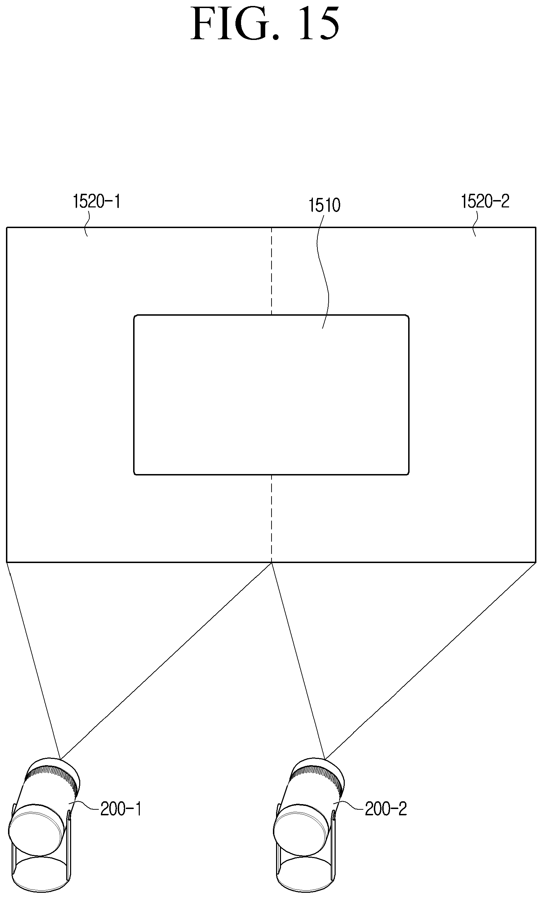

Meanwhile, the aforementioned embodiment describes that the first electronic device 100 segments the input image of the content into the first area to be displayed by the first electronic device 100 and the second area to be displayed by the second electronic device 200. However, it is merely one of examples and the first electronic device 100 may segment the input image of the content into three or more areas. For example, the first electronic device 100 may segment the image of the content into a first area 1510 to be displayed by the first electronic device 100, a second area 1520-1 to be displayed by a second electronic device 200-1 and a third area 1520-2 to be displayed by a second electronic device 200-2 as shown in FIG. 15. Meanwhile, the aforementioned describes that the input image of the content is segmented into three or more by using at least one first electronic device 100 and at least one second electronic device. However, it is merely one of examples and the image of the content may be segmented into three or more by using a portable terminal (e.g. a smart phone, a notebook computer, a tablet PC, etc.). For example, the first electronic device 100 may segment the image of the content into a first area to be displayed by the first electronic device 100, a second area to be displayed by the second electronic device 200, and a third area to be displayed by the portable terminal device (e.g. a smart phone, etc.).

Meanwhile, the aforementioned embodiment describes that the first electronic device 100 is a main device, wherein it segments the input image into the first area and the second area based on information about the projection surface onto which the second electronic device 200 projects an image and information about the first electronic device 100, displays part of the image based on information about the first area of the image, and transmits information about the second area of the image to the second electronic device 200. However, the above is merely one of examples and the second electronic device 200 may operate as a main device. That is, a subject of operations described in FIGS. 1 to 15 may be realized to be the second electronic device 200 rather than the first electronic device 100.

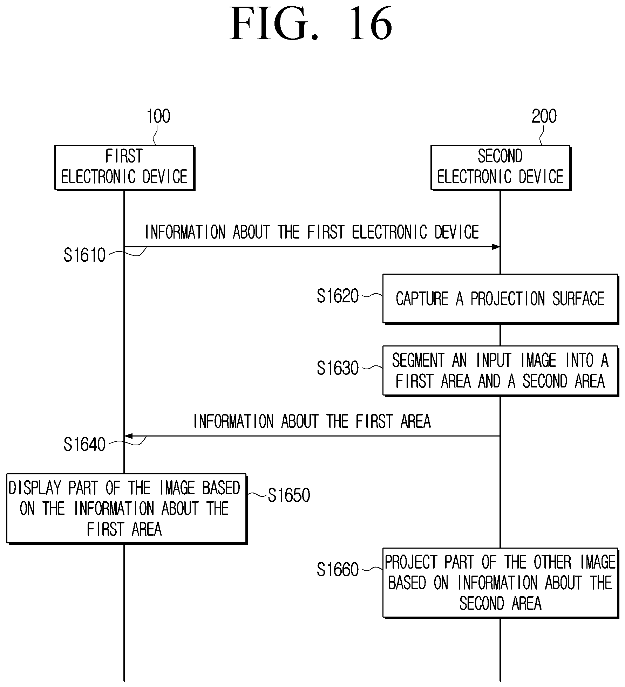

FIG. 16 is a sequence diagram for describing an example in which a first electronic device displaying an image and a second electronic device projecting an image provide a content according to an embodiment.

First, the first electronic device 100 may transmit information about the first electronic device 100 to the second electronic device 200 (S1610). Here, information about the first electronic device 100 may include information (e.g. a size, resolution, a scan rate, etc.) about the display of the first electronic device 100 and identification information (e.g. a product name, etc.) of the first electronic device 100.

The second electronic device 200 may capture a projection surface (S1620). Here, the projection surface may include an area where the first electronic device 100 is positioned and the second electronic device 200 may capture a projection surface including the area where the first electronic device 100 is positioned to obtain an image.

The second electronic device 200 may segment the input image into the first area and the second area (S1630). Specifically, the second electronic device 200 may segment the input image into the first area and the second area based on information about the projection surface obtained from the image capturing the projection surface and information about the first electronic device 100.

The second electronic device 200 may transmit the information about the first area to the first electronic device 100 (S1640). Further, the first electronic device 100 may display part of the input image based on the information about the first area (S1650).

While the first electronic device 100 displays part of the input image based on the information about the first area, the second electronic device 200 may project part of the other image based on information about the second area (S1660).

Also, a subject of the operations described in FIGS. 1 to 15 may be realized as an external control device (e.g. a set-top box or a smart phone) or the like rather than the first electronic device 100 or the second electronic device 200.

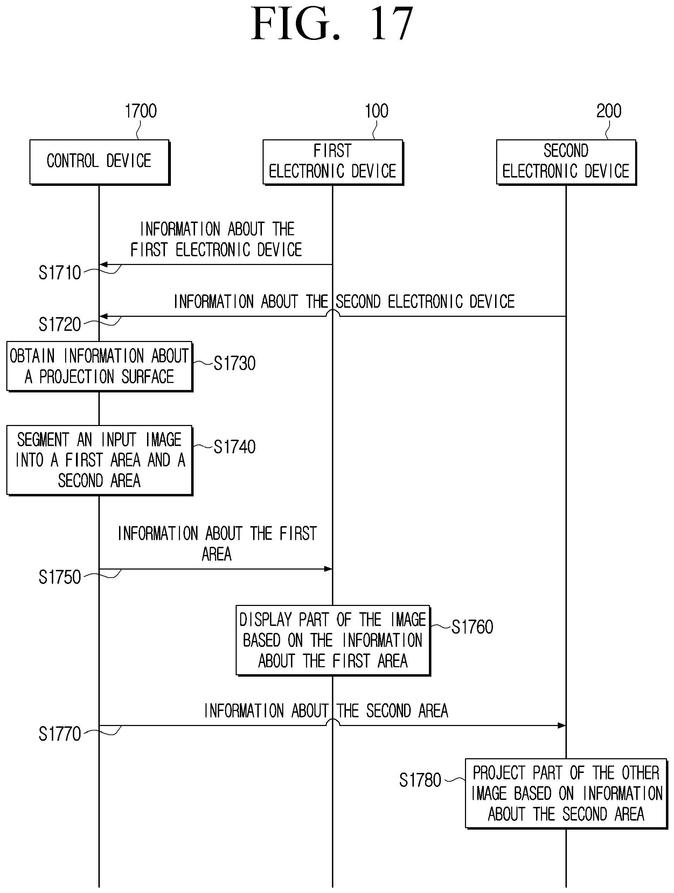

FIG. 17 is a sequence diagram for describing an example in which a first electronic device displaying an image and a second electronic device projecting an image provide a content through a control device according to an embodiment.

First, the first electronic device 100 may transmit information about the first electronic device 100 to a control device 1700 (S1710). Here, the information about the first electronic device 100 may include information (e.g. a size, resolution, a scan rate, etc.) about the display of the first electronic device 100 and identification information (e.g. a product name, etc.) of the first electronic device 100.

The second electronic device 200 may transmit the information about the second electronic device 200 to the control device 1700 (S1720). Here, information about the second electronic device 200 may include information (e.g. a size, resolution, brightness, etc.) about the projection part of the second electronic device 200 and identification information (e.g. a product name, etc.) of the second electronic device 200.

The control device 1700 may obtain information about the projection surface (S1730). For example, the control device 1700 may obtain information about the projection surface based on the image of the projection surface captured by the control device 1700 or the second electronic device 200 and may obtain information about the projection surface based on information of a distance between the first electronic device 100 and the second electronic device 200 obtained by the second electronic device 200.

The control device 1700 may segment the input image into the first area and the second area (S1740). Specifically, the control device 1700 may segment the input image into the first area and the second area based on information about the projection surface as previously described.

The control device 1700 may transmit the information about the first area to the first electronic device 100 (S1750). Further, the first electronic device 100 may display part of the input image based on the information about the first area (S1760).

The control device 1700 may transmit the information about the second area to the second electronic device 200 (S1770). While the first electronic device 100 displays part of the input image based on the information about the first area, the second electronic device 200 may project part of the other image based on the information about the second area (S1780).

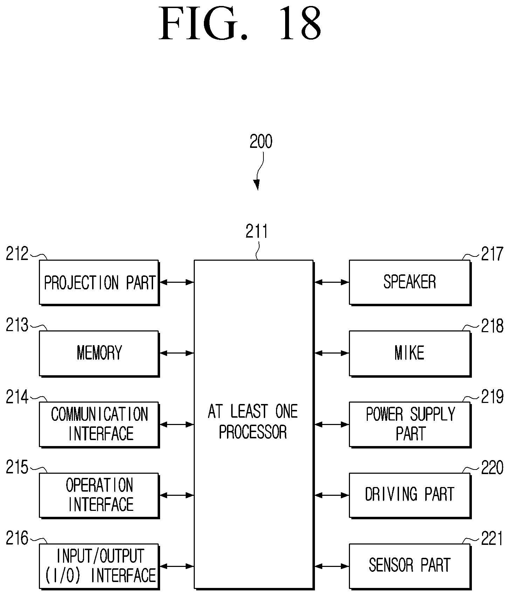

FIG. 18 is a block diagram of specifically illustrating a configuration of a second electronic device 200 according to an embodiment. Referring to FIG. 18, the second electronic device 200 may include at least one of at least one processor 211, a projection part 212, memory 213, a communication interface214, an operation interface 215, an I/O interface 216, a speaker 217, a mike 218, a power supply part 219, a driving part 220, or a sensor part 221. Meanwhile, a configuration shown in FIG. 18 is merely one of various examples, wherein part of the configuration may be omitted and a novel configuration may be added.

The at least one processor 211 may be realized as a digital signal processor (DSP) processing a digital signal, a microprocessor, or a Time controller (TCON). However, it is not limited thereto and may include one or more of a central processing unit (CPU), a Micro Controller Unit (MCU), a micro processing unit (MPU), a controller, an application processor (AP), a graphics-processing unit (GPU) or a communication processor (CP), or an advanced reduced instruction set computer (RISC) machines (ARM) processor or may be defined based on the relative terms. Also, the at least one processor 211 may be realized as a system on chip (SoC) or large scale integration (LSI) in which a processing algorism is embedded and may be realized in a form of a Field Programmable gate array (FPGA). Also, the at least one processor 211 may perform various functions by executing computer executable instructions stored in the memory 213.

The projection part 212 is configured to externally project an image. According to one of various examples of the disclosure, the projection part 212 may be realized by various projection methods (e.g. a cathode-ray tube (CRT) method, a liquid crystal display (LCD) method, a digital light processing (DLP) method, a laser method, etc.). As an example, the CRT method is basically the same as the principle of a CRT monitor. The CRT method displays an image on the screen by extending an image with a lens in the front of a cathode ray tube (CRT). According to the number of the cathode ray tube, it is divided into a 1-tube type and a 3-tube type. In the case of the 3-tube type, it maybe be realized by separately dividing the cathode ray tube into red, green, and blue cathode ray tubes.

As another example, the LCD method is a method of displaying an image by transmitting light resulting from a light source to a liquid crystal. The LCD method is divided into a single panel type and a 3-panel type, wherein in the case of the 3-panel type, light resulting from the light source is divided into red, green, and blue light on a dichroic mirror (a mirror which reflects light having a specific color and passes the others) and then is transmitted to the liquid crystal. Thereafter, the light may gather at one point again.

As still another example, the DLP method is a method of displaying an image by using a digital micromirror device (DMD) chip. The projection part of the DLP method may include a light source, a color wheel, a DMD chip, a projection lens, etc. Light output from the light source may have color as passing through a rotating color wheel. Light passing through the color wheel is input to the DMD chip. The DMD chip includes a number of micromirrors and reflects light input to the DMD chip. The projection lens may perform a role of extending light reflected from the DMD chip to a size of the image.

As another example, the laser method includes a diode pumped solid state (DPSS) laser and a galvanometer. A laser which outputs various colors uses a laser in which optical axises are overlapped by using a special mirror after installing three DPSS lasers according to RGB colors. The galvanometer includes a mirror and a motor having a high output power and moves the mirror in a fast speed. For example, the galvanometer may rotate a mirror at maximum 40 KHz/sec. The galvanometer is mounted according to a scan direction, wherein the projector performs flatbed scanning in general and thus the galvanometer may be also arranged to be divided into x and y axises.

Meanwhile, the projection part 212 may include various types of light sources. For example, the projection part 212 may include at least one light source of a lamp, a LED, or a laser.

The projection part 212 may output an image in a 4:3 aspect ratio, a 5:4 aspect ratio, a 16:9 wide aspect ratio according to use of the second electronic device 200, setting of the user, etc. According to the aspect ratio, it may output an image in various resolution such as WVGA(854*480), SVGA(800*600), XGA(1024*768), WXGA(1280*720), WXGA(1280*800), SXGA(1280*1024), UXGA(1600*1200), and Full HD(1920*1080) .

Meanwhile, the projection part 212 may perform various functions for controlling an output image by controlling the at least one processor 211. For example, the projection part 212 may perform functions such as a zoom, a keystone, a quick corner (4-corner) keystone, and a lens shift.

Specifically, the projection part 212 may extend or reduce an image according a distance from a screen (a projection distance). That is, a zoom function may be performed according the distance from the screen. Here, the zoom function may include a hardware method of moving a lens to control a size of the screen and a software method of controlling a size of the screen by cropping an image, etc. Meanwhile, if the zoom function is performed, it is needed to control of focus of the image. For example, a method of controlling the focus includes a manual focus method, an electric method, etc. The manual focus method means a method of adjusting focus manually and the electric method means a method in which the projector automatically adjusts focus by using an embedded motor if the zoom function is performed. If the zoom function is performed, the projection part 212 may provide a digital zoom function through software and may provide an optical zoom function of performing the zoom function by moving the lens through the driving part 220.

Also, the projection part 212 may perform a keystone correction function. If a height is not suitable for a front projection, the screen may be distorted upwardly or downwardly. The keystone correction function means a function of correcting the distorted screen. For example, if the distortion occurs in right and left directions of the screen, it may be corrected by using a horizontal keystone and if the distortion occurs in up and down directions, it may be corrected by using a vertical keystone. The quick corner (4-corner) keystone correction function is a function of correcting a screen if a center area of the screen is normal but corner areas thereof are not balanced. The lens shift function is a function of shifting a picture as it is if the picture deviates from the screen.

Meanwhile, the projection part 212 may provide a zoom/keystone/focus function by automatically analyzing a surrounding environment and a projection environment without a user input. Specifically, the projection part 212 may automatically provide the zoom/keystone/focus function based on a distance between the second electronic device 200 and the screen, information about a space where the second electronic device 200 is currently positioned, information about an amount of light of surroundings, and the like sensed by a sensor (a depth camera, a distance sensor, an infrared sensor, an illuminance sensor, etc.).

Also, the projection part 212 may provide a lighting function by using a light source. In particular, the projection part 212 may provide the lighting function by outputting the light source by using a LED. According to one of various examples, the projection part 212 may include one LED. According to another example, the second electronic device 200 may include a plurality of LEDs. Meanwhile, the projection part 212 may output the light source by using a surface light emitting LED according to an embodiment. Here, the surface light emitting LED may mean a LED having a structure that an optical sheet is disposed on an upper side of the LED such that the light source is evenly dispersed and output. Specifically, if the light source is output through the LED, the light source may be evenly dispersed throughout the optical sheet and the light source dispersed throughout the optical sheet may enter into a display panel.

Meanwhile, the projection part 212 may provide a dimming function for controlling strength of the light source to the user. Specifically, if a user input for controlling strength of the light source from the user through an operation interface 215 (e.g. a touch display button or a dial) is received, the projection part 212 may control the LED to output strength of the light source corresponding to the received user input.

Also, the projection part 212 may provide the dimming function based on a content analyzed by the at least one processor 211 without the user input. Specifically, the projection portion 212 may control the LED to output strength of the light source based on information (e.g. a type of a content, brightness of a content, etc.) about the content currently provided.

Meanwhile, the projection portion 212 may control a color temperature by controlling the at least one processor 211. Here, the at least one processor 211 may control the color temperature based on a content. Specifically, if the at least one processor 211 identifies to output the content, it may obtain color information per frame of the content of which the output is determined. Further, the at least one processor 211 may control the color temperature based on color information per the obtained frame. Here, the at least one processor 211 may obtain at least one or more of main colors of the frame based on color information per frame. Further, the at least one processor 211 may control color temperature based on the obtained at least one or more main colors. For example, the color temperature capable of being controlled by the at least one processor 211 may be divided into a warm type or a cold type. Here, it is assumed that the frame to be output (hereinafter, referred to as an output frame) includes a scene where a fire breaks out. The at least one processor 211 may identify (or obtain) that the main color is red based on color information included in the current output frame. Further, the at least one processor 211 may identify the color temperature corresponding to the identified main color (red). Here, the color temperature corresponding to red may be the warm type. Meanwhile, the at least one processor 211 may use the AI model to obtain color information or a main color of the frame. According to one of various examples, the AI model may be stored in the second electronic device 200 (e.g. memory 213). According to another example, the AI model may be stored in an external server communicable with the second electronic device 200.

The memory 213 may be realized as internal memory such as ROM (e.g. electrically erasable programmable read-only memory (EEPROM)), and RAM included in the at least one processor 211 or may be realized as memory separate from the at least one processor 211. In this case, the memory 213 may be realized in a form of memory embedded into the second electronic device 200 according to a data storage use or may be realized in a form of memory attachable/detachable to the second electronic device 200. For example, data for driving the second electronic device 200 is stored in memory embedded in the second electronic device 200 and data for an extension function of the second electronic device 200 may be stored in memory attachable/detachable to the second electronic device 200.

Meanwhile, the memory embedded in the second electronic device 200 may be realized as at least one of volatile memory (e.g. dynamic RAM (DRAM), static RAM (SRAM), synchronous dynamic RAM (SDRAM), etc.) or non-volatile memory (e.g. one time programmable ROM (OTPROM), programmable ROM (PROM), erasable and programmable ROM (EPROM), electrically erasable and programmable ROM (EEPROM), mask ROM, flash ROM, flash memory (e.g. a NAND flash, a NOR flash, etc.), a hard drive, or a solid state drive (SSD)). The memory attachable/detachable to the second electronic device 200 may be realized in a form of a memory card (e.g. a compact flash (CF), secure digital (SD), micro secure digital (Micro-SD), mini secure digital (Mini-SD), extreme digital (xD), a multi-media card (MMC), external memory (e.g. USB memory) connectable to a USB port, etc.

The memory 213 may store at least one of instructions with respect to the second electronic device 200. Further, the memory 213 may store an operating system (O/S) for driving the second electronic device 200. Also, the memory 213 may store various software programs or applications for operating the second electronic device 200 according to various embodiments of the disclosure. Still further, the memory 213 may include semiconductor memory such as flash memory or a magnetic storage medium such as a hard disk.

Specifically, the memory 213 may store various software modules for operating the second electronic device 200 and the at least one processor 211 may implement various software modules stored in the memory 213 to control operations of the second electronic device 200 according to various embodiments of the disclosure. That is, the memory 213 is accessed by the at least one processor 211 and a read/a record/a correction/a deletion/renewal, or the like of data may be performed by the at least one processor 211.

Meanwhile, the term of the memory 213 of the disclosure may be used as a meaning including a storage, ROM within the at least one processor 211 (not shown), RAM (not shown) or a memory card mounted in the second electronic device 200 (not shown) (e.g. a micro SD card, a memory stick).

The communication interface 214 is configured to perform communication with various types of external devices according various types of communication methods. The communication interface 214 may include a wireless communication module or a wired communication module. Here, each communication module may be realized in a form of at least one hardware chip.

The wireless communication module may be a module in communication with an external device wirelessly. For example, the wireless communication module may include at least one module of a Wi-Fi module, a Bluetooth module, an infrared communication module, or the other communication module.

The Wi-Fi module and the Bluetooth module may perform communication in a Wi-Fi method and a Bluetooth method, respectively. In the case of using the Wi-Fi module or the Bluetooth module, it may transmit/receive various information after performing communication connection by transmitting/receiving first and then using various connection information such as a service set identifier (SSID) and a session key.

The infrared communication module performs communication according to an infrared data association (IrDA) technology which transmits data wirelessly in a short range by using infrared between visible light and a millimeter wave.

The other module may include at least one communication chip of performing communication according to various wireless communication standards such as zigbee, 3rd generation (3G), a 3rd generation partnership project (3GPP), long term evolution (LTE), LTE Advanced (LTE-A), 4th generation (4G), and 5th generation (5G).

The wired communication module may be a module in communication with an external device by wire. For example, the wired communication module may include at least one of a local area network (LAN) module, an Ethernet module, a pair cable, a coaxial cable, an optical fiber cable or an ultra-wide band (UWB) module.

The operation interface 215 may include various types of input devices. For examples, the operation interface 215 may include a physical button. Here, the physical button may include a function key, an arrow key (e.g. four-arrow keys), or a dial button. According to one of various examples, the physical button may be realized as a plurality of keys. According to another example, the physical button may be realized as one key. Here, if the physical key is realized as one key, the second electronic device 200 may receive a user input in which the one key is pushed for a critical time or more. If the user input in which the one key is pushed for the critical time or more is received, the at least one processor 211 may perform a function corresponding to the user input. For example, the at least one processor 211 may provide a lighting function based on the user input.

Also, the operation interface 215 may receive the user input by using a non-contact method. When the user input is received through the non-contact method, a physical force must be transferred to the second electronic device 200. Therefore, there may be a need of a method for controlling the second electronic device 200 regardless of the physical force. Specifically, the operation interface 215 may receive a user gesture and may perform an operation corresponding to the received user gesture. Here, the operation interface 215 may receive a gesture of the user through a sensor (e.g. an image sensor or an infrared sensor).

Also, the operation interface 215 may receive the user input by using a touch method. For example, the operation interface 215 may receive the user input through a touch sensor. According to one of various examples, the touch method may be realized in a non-contact method. For example, the touch sensor may determine whether a user body accesses it within a critical distance. Here, the touch sensor may identify the user input even if the user does not contact the touch sensor. Meanwhile, the touch sensor may identify the user input in which the user contacts the touch sensor.

Meanwhile, the second electronic device 200 may receive the user input through various methods besides the operation interface 215. As one of various examples, the second electronic device 200 may receive the user input though an external remote control device. Here, the external remote control device may be a remote control device corresponding to the second electronic device 200 (e.g. dedicated control equipment of the second electronic device 200) or portable communication equipment of the user (e.g. a smart phone or a wearable device). Here, the portable communication equipment of the user may store an application for controlling the second electronic device 200. The portable communication equipment may obtain the user input through the stored application and may transmit the obtained user input to the second electronic device 200. The second electronic device 200 may receive the user input from the portable communication equipment and may perform an operation corresponding to a control command of the user.

Meanwhile, the second electronic device 200 may receive the user input by using voice recognition. According to one of various examples, the second electronic device 200 may receive a user voice through a mike included in the second electronic device 200. According to another example, the second electronic device 200 may receive the user voice from the mike or an external device. Specifically, the external device may obtain the user voice through the mike of the external device and may transmit the obtained user voice to the second electronic device 200. The user voice transmitted from the external device may be audio data or digital data to which the audio data is converted (e.g. the audio data converted to a frequency domain, etc.). Here, the second electronic device 200 may perform an operation corresponding to the received user voice. Specifically, the second electronic device 200 may receive the audio data corresponding to the user voice through the mike. Further, the second electronic device 200 may convert the received audio data to digital data. Still further, the second electronic device 200 may convert the converted digital data to text data by using a speech to text (STT) function. According to one of various examples, the STT function may be directly performed in the second electronic device 200.

According to another example, the STT function may be performed in an external server. The second electronic device 200 may transmit digital data to the external server. The external server may convert digital data to text data and may obtain control command data based on the converted text data. The external server may transmit the control command data (here, text data may be included) to the second electronic device 200. The second electronic device 200 may perform an operation corresponding to a user voice based on the obtained control command data.

Meanwhile, the second electronic device 200 may provide a voice recognition function by using one assistant (or an AI secretary, e.g. Bixby^{™}, etc.). However, it is merely one of various examples and the voice recognition function may be provided through a plurality of assistants. Here, the second electronic device 200 may select one of a plurality of assistants based on a specific key present in a trigger word or a remote controller corresponding to the assistant to provide the voice recognition function.

Meanwhile, the second electronic device 200 may receive the user input by using a screen interaction. The screen interaction may mean a function that the second electronic device 200 identifies whether the predetermined event occurs through an image projected onto the screen (or the projection surface) and obtains the user input based on the predetermined event. Here, the predetermined event may mean an event that the predetermined object is identified at a specific location (e.g. a location where a UI for receiving the user input is projected). Here, the predetermined object may include at least one of part of the user body (e.g. a finger), a pointer, or a laser pointer. If the predetermined object is identified at the location corresponding to the projected UI, the second electronic device 200 may identify that a user input of selecting the projected UI is received. For example, the second electronic device 200 may project a guide image to display the UI on the screen. Further, the second electronic device 200 may identify whether the user selects the projected UI. Specifically, if the predetermined event is identified at the location of the projected UI, the second electronic device 200 may identify that the user selects the projected UI. Here, the projected UI may include one or more items. Here, the second electronic device 200 may perform space analysis for identifying whether the predetermined event is present at the location of the projected UI. Here, the second electronic device 200 may perform the space analysis through a sensor (e.g. an image sensor, an infrared sensor, a depth sensor, a distance sensor, etc.) The second electronic device 200 may identify whether the predetermined event occurs at a specific location (a location where the UI is projected) by performing the space analysis. Further, if it is identified that the predetermined event occurs at the specific location (the location where the UI is projected), the second electronic device 200 may identify that the user input for selecting the UI corresponding to the specific location is received.

The I/O interface 216 is configured to input/output at least one of an audio signal or an image signal. The I/O interface 216 may receive at least one of the audio signal or the image signal from an external device and may output a control command from the external device.

According to an embodiment, the I/O interface 216 may be realized as an interface inputting/outputting only the audio signal and an interface inputting/outputting only the image signal or may be realized as one interface inputting/outputting all of the audio signal and the image signal.

Meanwhile, the I/O interface 216 according to one of various examples of the disclosure may be realized as at least one or more wired I/O interface of a high definition multimedia interface (HDMI), a mobile high-definition link (MHL), a universal serial bus (USB), a C-type USB, a display port (DP), a thunderbolt, a video graphics array (VGA) port, a RGB port, a D-subminiature (D-SUB), connector, or a digital visual interface (DVI). According to one of various examples, the wired I/O interface may be realized as an interface inputting/outputting only the audio signal and an interface inputting/outputting only the image signal or may be realized as one interface inputting/outputting all of the audio signal and the image signal.

Also, the second electronic device 200 may receive data through the wired I/O interface. However, it is merely one of various examples and power may be provided through the wired I/O interface. For example, the second electronic device 200 may receive the power from an external battery through the C-type USB or may receive the power from an electric outlet through a power adapter. As another example, the second electronic device 200 may receive power from the external device (e.g. a notebook computer, a monitor, etc.) through the DP.

Meanwhile, the audio signal may be realized to be received through the wired I/O interface and the image signal may be realized to be received through the wireless I/O interface (or a communication interface). Also, the audio signal may be received through the wireless I/O interface (or the communication interface) and the image signal may be realized to be received through the wired I/O interface.

The speaker 217 is configured to output an audio signal. In particular, the speaker 217 may include an audio output mixer, an audio signal processor, and a sound output module. The audio output mixer may synthesize a plurality of audio signals to be output into at least one audio signal. For example, the audio output mixer may synthesize the analog audio signal and another analog audio signal (e.g. an analog audio signal received from the outside) into at least one analog audio signal. The sound output module may include a speaker or an output terminal. According to one of various examples, the sound output module may include a plurality of speakers. In this case, the sound output module may be disposed in a body. Sound emitted while covering at least part of a diaphragm of the sound output module may pass through a waveguide and be transferred to the outside of the body. The sound output module may include a plurality of sound output units and the plurality of sound output units are symmetrically arranged with respect to an appearance of the body. As a result, sound may be emitted in all directions, i.e. , in all directions of 360°.

The mike 218 is configured to receive user voices or other sounds and convert them to audio data. The mike 218 may receive the user voice in an active state. For example, the mike 218 may be formed to be integrated with an upper side, a front direction, a side direction, or the like of the second electronic device 200. The mike 218 may include various configurations such as a mike collecting a user voice in an analog form, an amplifier circuit amplifying the collected user voice, an A/D converting circuit sampling the amplified user voice to convert it to a digital signal, and a filter circuit removing a noise component from the converted digital signal.

The power supply part 219 may receive power from the outside and may supply power to various configurations of the second electronic device 200. According to one of various examples of the disclosure, the power supply part 219 may receive power through various methods. As one of various examples, the power supply part 219 may receive power by using a connector 230. Also, the power supply part 219 may receive power by using a DC power cord of 220V. However, the disclosure is not limited thereto and the second electronic device 200 may receive power by using a USB power cord or may receive power by using a wireless charging method.

Also, the power supply part 219 may receive power by using an internal battery or an external battery. According to one of various examples of the disclosure, the power supply part 219 may receive power through the internal battery. As an example, the power supply part 219 may charge power of the internal battery by using at least one of a DC power cord of 220V, a USB power cord, or a C-type USB power cord and may receive power through the charged internal battery. Also, the power supply part 219 according to one of various examples of the disclosure may receive power through the external battery. As an example, if connection between the second electronic device 200 and the external battery is performed through various wired communication methods such as a USB power cord, a C-type USB power cord, and a socket groove, the power supply part 219 may receive power through the external battery. That is, the power supply part 219 may directly receive power from the external battery or may charge the internal battery through the external battery to receive power from the charged internal battery.

According to the disclosure, the power supply part 219 may receive power by using at least one of the plurality of power supply methods as aforementioned.

Meanwhile, related to power consumption, the second electronic device 200 may have to power consumption of the preset value (e.g. 43W) or less due to a form of a socket, other standards, etc. Here, the second electronic device 200 may vary power consumption to reduce power consumption when using the battery. That is, the second electronic device 200 may vary power consumption based on a power supply method, power usage, etc.

The driving part 220 may drive at least one hardware configuration included in the second electronic device 200. The driving part 220 may generate physical power and may transfer it to at least one hardware configuration included in the second electronic device 200.

Here, the driving part 220 may generate driving power for movement of a hardware configuration included in the second electronic device 200 (e.g. movement of the second electronic device 200) or for a rotating operation (e.g. rotation of the projection lens) of a configuration.

The driving part 220 may control a projection direction (or a projection angle) of the projection part 222. Also, the driving part 220 may move a location of the second electronic device 200. Here, the driving part 220 may control a moving member 209 for moving the second electronic device 200. For example, the driving part 220 may control the moving member 209 by using a motor.

The sensor part 221 may include at least one sensor. Specifically, the sensor part 221 may include at least one of a tilt sensor sensing a tilt of the second electronic device 200 or an image sensor capturing an image. Here, the tilt sensor may be an acceleration sensor or a gyro sensor and the image sensor may mean a camera or a depth camera. Meanwhile, the tilt sensor may be described as a motion sensor. Also, the sensor part 221 may include various sensors besides the tilt sensor or the image sensor. For example, the sensor part 221 may include an illuminance sensor or a distance sensor. The distance sensor may include a time of flight (ToF) sensor. Also, the sensor part 221 may include a LIDAR sensor.

Meanwhile, the second electronic device 200 may control a lighting function in conjunction with external equipment. Specifically, the second electronic device 200 may receive lighting information from the external equipment. Here, the lighting information may include at least one of information about brightness or information about a color temperature set from the external equipment. Here, the external equipment may mean equipment (e.g. IoT equipment included in the same home/company network) connected to the same network with that of the second electronic device 200 or equipment (e.g. a remote control server) that is not connected to the same network with that of the second electronic device 200 but is communicable with the second electronic device 200. For example, it is assumed that the external lighting equipment (IoT equipment) included in the same network with that of the second electronic device 200 outputs red lighting in brightness of 50. The external lighting equipment (IoT equipment) may directly or indirectly transmit lighting information (e.g. information indicating that red lighting is output in brightness of 50) to the second electronic device 200. Here, the second electronic device 200 may control output power of a light source based on the lighting information received from the external lighting equipment. For example, if the lighting information received from the external lighting equipment includes information in which red lighting is output in brightness of 50, the second electronic device 200 may output red lighting in brightness of 50.

Meanwhile, the second electronic device 200 may control a lighting function based on biometric data. Specifically, the at least one processor 211 may obtain biometric data of a user. Here, the biometric data may include at least one of a body temperature of the user, the number of a cardiac impulse, a blood pressure, breathing, or an electrocardiogram. Here, the biometric data may include various information besides the aforementioned information. As an example, the second electronic device 200 may include a sensor for measuring biometric data. The at least one processor 211 may obtain biometric data of the user through the sensor and may control the output of the light source based on the obtained biometric data. As another example, the at least one processor 211 may receive biometric data from the external equipment through the I/O interface 216. Here, the external equipment may mean a portable communication device (e.g. a smart phone or a wearable device) of the user. The at least one processor 211 may obtain biometric data of the user from the external equipment and may control the output of the light source based on the obtained biometric data. Meanwhile, according to an embodiment, the second electronic device 200 may identify whether the user sleeps and if it identifies that the user sleeps (or prepares to sleep), the at least one processor 211 may control the output of the light source based on the biometric data of the user.

Meanwhile, the second electronic device 200 according to one of various examples of the disclosure may provide various smart functions.

Specifically, the second electronic device 200 may be connected to a portable terminal device for controlling the second electronic device 200 to control the screen outputted from the second electronic device 200 through the user input inputted from the portable terminal device. As an embodiment, the portable terminal device may be realized as a smart phone including a touch display, the second electronic device 200 may receive and output screen data provided by the portable terminal device from the portable terminal device, and the screen outputted from the second electronic device 200 may be controlled according to the user input inputted from the portable terminal device.

The second electronic device 200 may perform connection with the portable terminal device through various communication methods such as Miracast, Airplay, wireless DEX, and a remote PC method to share a content or music provided by the portable terminal device.

Further, connection between the portable terminal device and the second electronic device 200 may be performed in various connection methods. As one of various examples, wireless connection may be performed by searching for the second electronic device 200 in the portable terminal device or wireless connection may be performed by searching for the portable terminal device in the second electronic device 200. Further, the second electronic device 200 may output a content provided from the portable terminal device.

As one of various examples, after positioning the portable terminal device in a state where a specific content or music is output from the portable terminal device around the second electronic device 200, if the preset gesture is sensed by the display of the portable terminal device (e.g. a motion tap view), the second electronic device 200 may output the content or music outputted from the portable terminal device.

As one of various examples, in a state where a specific content or music is output from the portable terminal device, if the portable terminal device is close to the second electronic device 200 in the preset distance or less (e.g. a non-contact tap view) or the portable terminal device contacts the second electronic device 200 twice in a short interval (e.g. a contact tap view), the second electronic device 200 may output the content or music outputted from the portable terminal device.

In the aforementioned examples, the same screen as the screen provided by the portable terminal device is provided in the second electronic device 200 but the disclosure is not limited thereto. That is, connection between the portable terminal device and the second electronic device 200 is established, the portable terminal device outputs a first screen provided by the portable terminal device and the second electronic device 200 may output a second screen provided by the portable terminal device different from the first screen. As an example, the first screen may be a screen provided by a first application installed in the portable terminal device and the second screen may be a screen provided by a second application installed in the portable terminal device. As an example, the first screen and the second screen may be different screens provided by one application installed in the portable terminal device. Also, as an example, the first screen may be a screen including a UI in a form of a remote controller to control the second screen.

According to the disclosure, the second electronic device 200 may output an idle screen. As an example, if connection between the second electronic device 200 and the external equipment is not performed or there is no input received from the external equipment for the preset time, the second electronic device 200 may output an idle screen. A condition that the second electronic device 200 outputs the idle screen is not limited to the above example and the idle screen may be output by various conditions.

The second electronic device 200 may output the idle screen in a form of a blue screen but the disclosure is not limited thereto. As an example, the second electronic device 200 may extract only a form of a specific object from data received from the external equipment to obtain an atypical object and may output the idle screen including the obtained atypical object.

Meanwhile, the second electronic device 200 may further include a display (not shown).

The display (not shown) may be realized as displays having various forms such as a liquid crystal display (LCD), an organic light emitting diode (OLED) display, and a plasma display panel (PDP). The display (not shown) may include a driving circuit which may be realized as a form of an amorphous silicon thin film transistor (a-si TFT), a low temperature poly silicon (LTPS) TFT, an organic TFT (OTFT), or the like, a back light unit, etc. Meanwhile, the display (not shown) may be realized as a touch screen combined with a touch sensor, a flexible display, a three-dimensional display (3D display), etc. Also, according to one of various examples of the disclosure, the display (not shown) may include not only a display panel outputting an image but also a bezel housing the display panel. In particular, the bezel according to one of various examples of the disclosure may include the touch sensor (not shown) for sensing the user interaction.

Meanwhile, the second electronic device 200 may further include a shutter part (not shown).

The shutter part (not shown) may include at least one of a shutter, a fixing member, a rail, or a body.

Here, the shutter may block light output from the projection part 212. Here, the fixing member may fix a location of the shutter. Here, the rail may be a path for moving the shutter and the fixing member. Here, the body may be a component including the shutter and the fixing member.

Meanwhile, a subject of the operations described in FIGS. 1 to 15 may be realized as the second electronic device 200 described in FIG. 18 rather than the first electronic device 100.

Meanwhile, a method according to one of the various examples of the disclosure may be provided to be included in a computer program product. The computer program product may be traded between a seller and a buyer as a product. The computer program product may be distributed in the form of a storage medium that is readable by machines (e.g.: a compact disc read only memory (CD-ROM)), or may be distributed (e.g. downloaded or uploaded) on-line through an application store (e.g.: Play Store^{™}) or directly between two user devices (e.g. smart phones). In the case of on-line distribution, at least part of the computer program product (e.g. an downloadable app) may be stored in a storage medium that is readable by machines such as a server of a manufacturer, a server of an application store, and memory of a relay server at least temporarily, or may be generated temporarily.

A method according to one of various examples of the disclosure may be implemented as software including instructions stored in machine-readable storage media (e.g.: computers). The machines refer to devices that call instructions stored in a storage medium, and can operate according to the called instructions and may include an electronic device (e.g. TV) according to the disclosed examples.

Meanwhile, a storage medium which is readable by machines may be provided in a form of a non-transitory storage medium. Here, the 'non-transitory storage medium' is a tangible device and merely mean not to include a signal (e.g. an electromagnetic wave). This terminology does not separate the case that data is semipermanently stored in a storage medium from the case that it is temporarily stored therein. As an example, the 'non-transitory storage medium' may include a buffer where data is temporarily stored.

If the instructions are performed by a processor, the processor may perform a function corresponding to the instructions directly or by using other components under control of the processor. The instructions may include a cord generated or implemented by a compiler or an interpreter.

## Claims

1. A first electronic device (100), wherein said first electronic device (100) is a display device for installation on a wall, and is configured to provide an image content in conjunction with a second electronic device (200) projecting an image onto said wall, comprising:
a communication interface (130);
a display (110);
memory (150); and
at least one processor (160) connected with the communication interface (130), the display (110) and the memory (150) and configured to control the first electronic device (100),
wherein the at least one processor (160) is configured to:
obtain information about a projection surface to which the second electronic device (200) projects an image based on information received from the second electronic device (200);
segment an input image into a first area and a second area based on the information about the projection surface and information about the first electronic device (100); and
control the display (110) to display part of the image based on information about the first area in the image and control the communication interface (130) to transmit information about the second area in the image to the second electronic device (200);
convert a channel of an audio corresponding to the input image to a channel corresponding to an output specification of the second electronic device (200) and the first electronic device (100);
map the audio to the converted channel based on information about a location of the second electronic device (200);
analyze an image projected to the projection surface and perform post-processing on the audio per the converted channel; and
obtain a first audio signal to be output by the first electronic device (100) and a second audio signal to be output by the second electronic device (200) based on a result of post-processing

2. The first electronic device of claim 1, wherein the at least one processor (160) is configured to:
receive an image about the projection surface photographed by a camera included in the second electronic device (200) through the communication interface (130); and
identify an area where the first electronic device (100) is positioned on the projection surface based on the obtained image about the projection surface.

3. The first electronic device of claim 2, wherein the at least one processor (160) is configured to: identify an area corresponding to the area where the first electronic device (100) is positioned on the projection surface of the obtained image as the first area and identify the other areas excluding the first area in the obtained image as the second area.

4. The first electronic device of claim 1, wherein the at least one processor (160) is configured to:
receive information about a distance between the second electronic device (200) and the projection surface via a distance sensor included in the second electronic device (200) through the communication interface (130);
obtain information about a size and a location of the projection surface based on the information about the distance between the second electronic device (200) and the projection surface; and
segment the input image into the first area and the second area based on the information about the size and the location of the projection surface.

5. The first electronic device of claim 1, wherein the at least one processor (160) is configured to:
control the display (110) to display a screen of a preset color in the first electronic device (100) and control the communication interface (130) to transmit a control command to project a screen of the preset color to the second electronic device (200);
receive an image capturing the screen of the preset color displayed by the first electronic device (100) and the screen of the preset color projected by the second electronic device (200), from the second electronic device (200) through the communication interface (130); and
control brightness of at least one of a screen output by the first electronic device (100) or a screen projected by the second electronic device (200) based on the image received from the second electronic device (200).

6. The first electronic device of claim 1, wherein the at least one processor (160) is configured to:
control the display (110) to display a screen which changes to a pattern preset in the first electronic device (100) and control the communication interface (130) to transmit a control command to project a screen which changes to the preset pattern, to the second electronic device (200);
receive an image capturing a screen changing to the preset pattern displayed by the first electronic device (100) and a screen changing to the preset pattern projected by the second electronic device (200), from the second electronic device (200) through the communication interface (130); and
control at least one of an image output timing of the first electronic device (130) or an image projecting timing of the second electronic device (200) based on the image received from the second electronic device (200).

7. The first electronic device of claim 1, wherein the input image comprises flag information indicating whether the image of metadata is segmented; and
wherein the at least one processor (160) is configured to:
determine whether to segment the image into the first area and the second area based on the flag information.

8. The first electronic device of claim 1, wherein the first electronic device (100) is configured to: operate as one of a first mode which displays the input image in the first electronic device (100) and a second mode which segments and displays the input image through the first and second electronic devices (100, 200).

9. A method that controls a first electronic device that is a display device for installation on a wall, and which is configured to provide an image content in conjunction with a second electronic device projecting an image onto said wall, comprising:
obtaining information about a projection surface to which the second electronic device projects an image;
segmenting the input image into a first area and a second area based on information about the projection surface and information about the first electronic device; and
displaying part of the image and transmitting information about the second area in the image to the second electronic device based on information about the first area **in** the image;
converting a channel of an audio corresponding to the input image to a channel corresponding to an output specification of the second electronic device and the first electronic device;
mapping the audio to the converted channel based on information about a location of the second electronic device;
analyzing an image projected to the projection surface and perform post-processing on the audio per the converted channel; and
obtaining a first audio signal to be output by the first electronic device and a second audio signal to be output by the second electronic device based on a result of post-processing.

10. The method of claim 9, wherein the obtaining is to obtain an image about the projection surface photographed by a camera included in the second electronic device; and
wherein the controlling further comprises identifying an area where the first electron device is positioned on the projection surface based on the image about the obtained projection surface.

11. The method of claim 10, wherein the segmenting is to identify an area corresponding to the area where the first electronic device is positioned on the projection surface of the obtained image as the first area and identify the other areas excluding the first area in the obtained image as the second area.

12. The method of claim 9, wherein the obtaining is to:
obtain information about a distance between the second electronic device and the projection surface through a distance sensor included in the second electronic device; and
obtain information about a size and a location of the projection surface based on information about the distance between the second electronic device and the projection surface; and
wherein the segmenting is to segment the input image into the first area and the second area based on the information about the size and the location of the projection surface.

13. A computer readable recording medium configured to store a program for executing a control method of the first electronic device claimed in any one of claims 1-8, which when executed causes the first electronic device to carry out the control method as claimed in any one of claims 9 to 12

## Patentansprüche

1. Erste elektronische Vorrichtung (100), wobei die erste elektronische Vorrichtung (100) eine Anzeigevorrichtung zur Installation an einer Wand ist und dazu konfiguriert ist, einen Bildinhalt in Verbindung mit einer zweiten elektronischen Vorrichtung (200) bereitzustellen, die ein Bild auf die Wand projiziert, umfassend:
eine Kommunikationsschnittstelle (130);
eine Anzeige (110);
Speicher (150); und
zumindest einen Prozessor (160), der mit der Kommunikationsschnittstelle (130), der Anzeige (110) und dem Speicher (150) verbunden und dazu konfiguriert ist, die erste elektronische Vorrichtung (100) zu steuern,
wobei der zumindest eine Prozessor (160) zu Folgendem konfiguriert ist:
Erhalten von Informationen über eine Projektionsfläche, auf welche die zweite elektronische Vorrichtung (200) ein Bild projiziert, basierend auf Informationen, die von der zweiten elektronischen Vorrichtung (200) empfangen werden;
Segmentieren eines Eingabebildes in einen ersten Bereich und einen zweiten Bereich basierend auf den Informationen über die Projektionsfläche und Informationen über die erste elektronische Vorrichtung (100); und
Steuern der Anzeige (110), um Teil des Bildes basierend auf Informationen über den ersten Bereich in dem Bild anzuzeigen, und Steuern der Kommunikationsschnittstelle (130), um Informationen über den zweiten Bereich in dem Bild an die zweite elektronische Vorrichtung (200) zu übertragen;
Umwandeln eines Kanals eines Audios entsprechend dem Eingabebild in einen Kanal entsprechend einer Ausgabespezifikation der zweiten elektronischen Vorrichtung (200) und der ersten elektronischen Vorrichtung (100);
Zuordnen des Audios zu dem umgewandelten Kanal basierend auf Informationen über eine Stelle der zweiten elektronischen Vorrichtung (200);
Analysieren eines Bildes, das auf die Projektionsfläche projiziert wird, und Durchführen von Nachverarbeitung an dem Audio gemäß dem umgewandelten Kanal; und
Erhalten eines ersten Audiosignals, das durch die erste elektronische Vorrichtung (100) auszugeben ist, und eines zweiten Audiosignals, das durch die zweite elektronische Vorrichtung (200) auszugeben ist, basierend auf einem Ergebnis der Nachverarbeitung.

2. Erste elektronische Vorrichtung nach Anspruch 1, wobei der zumindest eine Prozessor (160) zu Folgendem konfiguriert ist:
Empfangen eines Bildes über die Projektionsfläche, das durch eine Kamera fotografiert wird, die in der zweiten elektronischen Vorrichtung (200) enthalten ist, durch die Kommunikationsschnittstelle (130); und
Identifizieren eines Bereichs, in dem die erste elektronische Vorrichtung (100) auf der Projektionsfläche positioniert ist, basierend auf dem erhaltenen Bild über die Projektionsfläche.

3. Erste elektronische Vorrichtung nach Anspruch 2, wobei der zumindest eine Prozessor (160) zu Folgendem konfiguriert ist: Identifizieren eines Bereichs entsprechend dem Bereich, in dem die erste elektronische Vorrichtung (100) auf der Projektionsfläche des erhaltenen Bildes positioniert ist, als den ersten Bereich und Identifizieren der anderen Bereiche mit Ausnahme des ersten Bereichs in dem erhaltenen Bild als den zweiten Bereich.

4. Erste elektronische Vorrichtung nach Anspruch 1, wobei der zumindest eine Prozessor (160) zu Folgendem konfiguriert ist:
Empfangen von Informationen über einen Abstand zwischen der zweiten elektronischen Vorrichtung (200) und der Projektionsfläche über einen Abstandssensor, der in der zweiten elektronischen Vorrichtung (200) enthalten ist, durch die Kommunikationsschnittstelle (130);
Erhalten von Informationen über eine Größe und eine Stelle der Projektionsfläche basierend auf den Informationen über den Abstand zwischen der zweiten elektronischen Vorrichtung (200) und der Projektionsfläche; und
Segmentieren des Eingabebildes in den ersten Bereich und den zweiten Bereich basierend auf den Informationen über die Größe und die Stelle der Projektionsfläche.

5. Erste elektronische Vorrichtung nach Anspruch 1, wobei der zumindest eine Prozessor (160) zu Folgendem konfiguriert ist:
Steuern der Anzeige (110), um einen Bildschirm einer voreingestellten Farbe in der ersten elektronischen Vorrichtung (100) anzuzeigen, und Steuern der Kommunikationsschnittstelle (130), um einen Steuerbefehl, um einen Bildschirm der voreingestellten Farbe zu projizieren, an die zweite elektronische Vorrichtung (200) zu übertragen;
Empfangen eines Bildes, das den Bildschirm der voreingestellten Farbe, der durch die erste elektronische Vorrichtung (100) angezeigt wird, und den Bildschirm der voreingestellten Farbe, der durch die zweite elektronische Vorrichtung (200) projiziert wird, erfasst, von der zweiten elektronischen Vorrichtung (200) durch die Kommunikationsschnittstelle (130); und
Steuern von Helligkeit von zumindest einem von einem Bildschirm, der durch die erste elektronische Vorrichtung (100) ausgegeben wird, oder einem Bildschirm, der durch die zweite elektronische Vorrichtung (200) projiziert wird, basierend auf dem Bild, das von der zweiten elektronischen Vorrichtung (200) empfangen wird.

6. Erste elektronische Vorrichtung nach Anspruch 1, wobei der zumindest eine Prozessor (160) zu Folgendem konfiguriert ist:
Steuern der Anzeige (110), um einen Bildschirm, der sich in ein Muster ändert, das in der ersten elektronischen Vorrichtung (100) voreingestellt ist, anzuzeigen, und Steuern der Kommunikationsschnittstelle (130), um einen Steuerbefehl, um einen Bildschirm, der sich in das voreingestellte Muster ändert, zu projizieren, an die zweite elektronische Vorrichtung (200) zu übertragen;
Empfangen eines Bildes, das einen Bildschirm, der sich in das voreingestellte Muster ändert, das durch die erste elektronische Vorrichtung (100) angezeigt wird, und einen Bildschirm, der sich in das voreingestellte Muster ändert, das durch die zweite elektronische Vorrichtung (200) projiziert wird, erfasst, von der zweiten elektronischen Vorrichtung (200) durch die Kommunikationsschnittstelle (130); und
Steuern von zumindest einem von einem Bildausgabezeitpunkt der ersten elektronischen Vorrichtung (130) oder einem Bildprojektionszeitpunkt der zweiten elektronischen Vorrichtung (200) basierend auf dem Bild, das von der zweiten elektronischen Vorrichtung (200) empfangen wird.

7. Erste elektronische Vorrichtung nach Anspruch 1, wobei das Eingabebild Flag-Informationen umfasst, die angeben, ob das Bild von Metadaten segmentiert ist; und
wobei der zumindest eine Prozessor (160) zu Folgendem konfiguriert ist:
Bestimmen, ob das Bild in den ersten Bereich und den zweiten Bereich zu segmentieren ist, basierend auf den Flag-Informationen.

8. Erste elektronische Vorrichtung nach Anspruch 1, wobei die erste elektronische Vorrichtung (100) zu Folgendem konfiguriert ist: Arbeiten als einer von einem ersten Modus, der das Eingabebild in der ersten elektronischen Vorrichtung (100) anzeigt, und einem zweiten Modus, der das Eingabebild segmentiert und durch die erste und die zweite elektronische Vorrichtung (100, 200) anzeigt.

9. Verfahren, das eine erste elektronische Vorrichtung steuert, die eine Anzeigevorrichtung zur Installation an einer Wand ist und die dazu konfiguriert ist, einen Bildinhalt in Verbindung mit einer zweiten elektronischen Vorrichtung bereitzustellen, die ein Bild auf die Wand projiziert, umfassend:
Erhalten von Informationen über eine Projektionsfläche, auf welche die zweite elektronische Vorrichtung ein Bild projiziert;
Segmentieren des Eingabebildes in einen ersten Bereich und einen zweiten Bereich basierend auf Informationen über die Projektionsfläche und Informationen über die erste elektronische Vorrichtung; und
Anzeigen von Teil des Bildes und Übertragen von Informationen über den zweiten Bereich in dem Bild an die zweite elektronische Vorrichtung basierend auf Informationen über den ersten Bereich in dem Bild;
Umwandeln eines Kanals eines Audios entsprechend dem Eingabebild in einen Kanal entsprechend einer Ausgabespezifikation der zweiten elektronischen Vorrichtung und der ersten elektronischen Vorrichtung;
Zuordnen des Audios zu dem umgewandelten Kanal basierend auf Informationen über eine Stelle der zweiten elektronischen Vorrichtung;
Analysieren eines Bildes, das auf die Projektionsfläche projiziert wird, und Durchführen von Nachverarbeitung an dem Audio gemäß dem umgewandelten Kanal; und
Erhalten eines ersten Audiosignals, das durch die erste elektronische Vorrichtung auszugeben ist, und eines zweiten Audiosignals, das durch die zweite elektronische Vorrichtung auszugeben ist, basierend auf einem Ergebnis der Nachverarbeitung.

10. Verfahren nach Anspruch 9, wobei das Erhalten dazu dient, ein Bild über die Projektionsfläche zu erhalten, das durch eine Kamera fotografiert wird, die in der zweiten elektronischen Vorrichtung enthalten ist; und
wobei das Steuern ferner Identifizieren eines Bereichs, in dem die erste Elektronenvorrichtung auf der Projektionsfläche positioniert ist, basierend auf dem Bild über die erhaltene Projektionsfläche umfasst.

11. Verfahren nach Anspruch 10, wobei das Segmentieren dazu dient, einen Bereich entsprechend dem Bereich, in dem die erste elektronische Vorrichtung auf der Projektionsfläche des erhaltenen Bildes positioniert ist, als den ersten Bereich zu identifizieren und die anderen Bereiche mit Ausnahme des ersten Bereichs in dem erhaltenen Bild als den zweiten Bereich zu identifizieren.

12. Verfahren nach Anspruch 9, wobei das Erhalten Folgendem dient:
Erhalten von Informationen über einen Abstand zwischen der zweiten elektronischen Vorrichtung und der Projektionsfläche durch einen Abstandssensor, der in der zweiten elektronischen Vorrichtung enthalten ist; und
Erhalten von Informationen über eine Größe und eine Stelle der Projektionsfläche basierend auf Informationen über den Abstand zwischen der zweiten elektronischen Vorrichtung und der Projektionsfläche; und
wobei das Segmentieren dazu dient, das Eingabebild in den ersten Bereich und den zweiten Bereich basierend auf den Informationen über die Größe und die Stelle der Projektionsfläche zu segmentieren.

13. Computerlesbares Aufzeichnungsmedium, das dazu konfiguriert ist, ein Programm zum Ausführen eines Steuerungsverfahrens der ersten elektronischen Vorrichtung, in einem der Ansprüche 1-8 beansprucht, zu speichern, das, wenn ausgeführt, bewirkt, dass die erste elektronische Vorrichtung das Steuerungsverfahren wie in einem der Ansprüche 9 bis 12 beansprucht vornimmt.

## Revendications

1. Premier dispositif électronique (100), dans lequel ledit premier dispositif électronique (100) est un dispositif d'affichage destiné à être installé sur un mur, et est configuré pour fournir un contenu d'image en conjonction avec un second dispositif électronique (200) projetant une image sur ledit mur, comprenant :
une interface de communication (130) ;
un affichage (110) ;
de la mémoire (150) ; et
au moins un processeur (160) connecté à l'interface de communication (130), à l'affichage (110) et à la mémoire (150) et configuré pour commander le premier dispositif électronique (100),
dans lequel l'au moins un processeur (160) est configuré pour :
obtenir des informations concernant une surface de projection sur laquelle le second dispositif électronique (200) projette une image sur la base d'informations reçues à partir du second dispositif électronique (200) ;
segmenter une image d'entrée en une première zone et une seconde zone sur la base des informations concernant la surface de projection et d'informations concernant le premier dispositif électronique (100) ; et
commander à l'affichage (110) d'afficher une partie de l'image sur la base d'informations concernant la première zone dans l'image et commander à l'interface de communication (130) de transmettre des informations concernant la seconde zone dans l'image au second dispositif électronique (200) ;
convertir un canal d'un audio correspondant à l'image d'entrée en un canal correspondant à une spécification de sortie du second dispositif électronique (200) et du premier dispositif électronique (100) ;
mapper l'audio sur le canal converti sur la base d'informations concernant un emplacement du second dispositif électronique (200) ;
analyser une image projetée sur la surface de projection et réaliser un post-traitement sur l'audio par le canal converti ; et
obtenir un premier signal audio devant être émis en sortie par le premier dispositif électronique (100) et un second signal audio devant être émis en sortie par le second dispositif électronique (200) sur la base d'un résultat de post-traitement.

2. Premier dispositif électronique de la revendication 1, dans lequel l'au moins un processeur (160) est configuré pour :
recevoir une image concernant la surface de projection photographiée par une caméra comprise dans le second dispositif électronique (200) au travers de l'interface de communication (130) ; et
identifier une zone où le premier dispositif électronique (100) est positionné sur la surface de projection sur la base de l'image obtenue concernant la surface de projection.

3. Premier dispositif électronique de la revendication 2, dans lequel l'au moins un processeur (160) est configuré pour :
identifier une zone correspondant à la zone où le premier dispositif électronique (100) est positionné sur la surface de projection de l'image obtenue en tant que première zone et identifier les autres zones excluant la première zone dans l'image obtenue en tant que seconde zone.

4. Premier dispositif électronique de la revendication 1, dans lequel l'au moins un processeur (160) est configuré pour :
recevoir des informations concernant une distance entre le second dispositif électronique (200) et la surface de projection par l'intermédiaire d'un capteur de distance compris dans le second dispositif électronique (200) au travers de l'interface de communication (130) ;
obtenir des informations concernant une taille et un emplacement de la surface de projection sur la base des informations sur la distance entre le second dispositif électronique (200) et la surface de projection ; et
segmenter l'image d'entrée dans la première zone et la seconde zone sur la base des informations concernant la taille et l'emplacement de la surface de projection.

5. Premier dispositif électronique de la revendication 1, dans lequel l'au moins un processeur (160) est configuré pour :
commander à l'affichage (110) d'afficher un écran d'une couleur prédéfinie dans le premier dispositif électronique (100) et commander à l'interface de communication (130) de transmettre une instruction de commande pour projeter un écran de la couleur prédéfinie au second dispositif électronique (200) ;
recevoir une image capturant l'écran de la couleur prédéfinie affiché par le premier dispositif électronique (100) et l'écran de la couleur prédéfinie projeté par le second dispositif électronique (200), à partir du second dispositif électronique (200) au travers de l'interface de communication (130) ; et
commander la luminosité d'au moins l'un d'un écran émis en sortie par le premier dispositif électronique (100) ou d'un écran projeté par le second dispositif électronique (200) sur la base de l'image reçue à partir du second dispositif électronique (200).

6. Premier dispositif électronique de la revendication 1, dans lequel l'au moins un processeur (160) est configuré pour :
commander à l'affichage (110) d'afficher un écran qui passe à un motif prédéfini dans le premier dispositif électronique (100) et commander à l'interface de communication (130) de transmettre une instruction de commande pour projeter un écran qui passe au motif prédéfini, au second dispositif électronique (200) ;
recevoir une image capturant un écran passant au motif prédéfini affiché par le premier dispositif électronique (100) et un écran passant au motif prédéfini projeté par le second dispositif électronique (200), à partir du second dispositif électronique (200) au travers de l'interface de communication (130) ; et
commander au moins l'une d'une temporalité de sortie d'image du premier dispositif électronique (130) ou d'une temporalité de projection d'image du second dispositif électronique (200) sur la base de l'image reçue à partir du second dispositif électronique (200).

7. Premier dispositif électronique de la revendication 1, dans lequel l'image d'entrée comprend des informations de signalisation indiquant si l'image de métadonnées est segmentée ; et
dans lequel l'au moins un processeur (160) est configuré pour :
déterminer s'il faut segmenter l'image en première zone et seconde zone sur la base des informations de signalisation.

8. Premier dispositif électronique de la revendication 1, dans lequel le premier dispositif électronique (100) est configuré pour :
fonctionner en tant que l'un d'un premier mode qui affiche l'image d'entrée dans le premier dispositif électronique (100) et d'un second mode qui segmente et affiche l'image d'entrée au travers des premier et second dispositifs électroniques (100, 200).

9. Procédé qui commande un premier dispositif électronique qui est un dispositif d'affichage destiné à être installé sur un mur, et qui est configuré pour fournir un contenu d'image en conjonction avec un second dispositif électronique projetant une image sur ledit mur, comprenant :
l'obtention d'informations concernant une surface de projection sur laquelle le second dispositif électronique projette une image ;
la segmentation de l'image d'entrée en une première zone et une seconde zone sur la base d'informations concernant la surface de projection et d'informations concernant le premier dispositif électronique ; et
l'affichage d'une partie de l'image et la transmission d'informations concernant la seconde zone dans l'image au second dispositif électronique sur la base d'informations concernant la première zone dans l'image ;
la conversion d'un canal d'un audio correspondant à l'image d'entrée en un canal correspondant à une spécification de sortie du second dispositif électronique et du premier dispositif électronique ;
le mappage de l'audio sur le canal converti sur la base d'informations concernant un emplacement du second dispositif électronique ;
l'analyse d'une image projetée sur la surface de projection et la réalisation d'un post-traitement sur l'audio par le canal converti ; et
l'obtention d'un premier signal audio devant être émis en sortie par le premier dispositif électronique et d'un second signal audio devant être émis en sortie par le second dispositif électronique sur la base d'un résultat de post-traitement.

10. Procédé de la revendication 9, dans lequel l'obtention doit obtenir une image concernant la surface de projection photographiée par une caméra comprise dans le second dispositif électronique ; et
dans lequel la commande comprend en outre l'identification d'une zone où le premier dispositif électron est positionné sur la surface de projection sur la base de l'image concernant la surface de projection obtenue.

11. Procédé de la revendication 10, dans lequel la segmentation doit identifier une zone correspondant à la zone où le premier dispositif électronique est positionné sur la surface de projection de l'image obtenue en tant que première zone et identifier les autres zones excluant la première zone dans l'image obtenue en tant que seconde zone.

12. Procédé de la revendication 9, dans lequel l'obtention doit :
obtenir des informations concernant une distance entre le second dispositif électronique et la surface de projection au travers d'un capteur de distance compris dans le second dispositif électronique ; et
obtenir des informations concernant une taille et un emplacement de la surface de projection sur la base d'informations sur la distance entre le second dispositif électronique et la surface de projection ; et
dans lequel la segmentation doit segmenter l'image d'entrée en première zone et seconde zone sur la base des informations concernant la taille et l'emplacement de la surface de projection.

13. Support d'enregistrement lisible par ordinateur configuré pour stocker un programme pour l'exécution d'un procédé de commande du premier dispositif électronique selon l'une quelconque des revendications 1 à 8, qui, lorsqu'il est exécuté, amène le premier dispositif électronique à effectuer le procédé de commande selon l'une quelconque des revendications 9 à 12.
